# EUROPEAN PATENT APPLICATION

(11) **EP 4 664 295 A1**
(43) Date of publication of application: **17.12.2025**
(21) Application number: 23923753.0
(22) Date of filing: 09.11.2023
(51) Int. Cl.: G06F 11/30

(54) **SERVICE SESSION DATA TRACKING METHOD AND APPARATUS, AND RELATED DEVICE**

(30) Priority: 22.02.2023 CN 202310152758; 12.05.2023 CN 202310538162
(71) Applicant: Huawei Cloud Computing Technologies Co., Ltd., Guizhou 550025 (CN)
(72) Inventor: YUAN, Hongjin, Guizhou, 550025 (CN); ZHOU, Jiachen, Guizhou, 550025 (CN); XIAO, Fujian, Guizhou, 550025 (CN)
(74) Representative: Maiwald GmbH
(86) International application number: PCT/CN2023/130641
(87) International publication number: WO 2024/174589

(57) **Abstract**

This application discloses a service session data tracing method applied to a tracing system. The method is applied to the field of computer technologies. The tracing system is used to trace a service system. The tracing system includes a service flow information configuration interface. The tracing system obtains service flow configuration information through the service flow information configuration interface. The service flow configuration information includes a plurality of service flow nodes, an execution sequence of the plurality of service flow nodes, and a data processing rule corresponding to at least one service flow node. The tracing system generates a target service flow based on the service flow configuration information, and executes the data processing rule corresponding to the at least one service flow node. A user can intuitively learn of a tracing progress of the tracing system based on the target service flow. In addition, tracing can be implemented without requiring the service system to cooperate with the tracing system to add an identifier. This reduces adverse impact of tracing the service system on running of the service system. This application further provides a corresponding apparatus, and a related device.

## Description

This application claims priority to Chinese Patent Application No. 202310152758.6, filed with the China National Intellectual Property Administration on February 22, 2023 and entitled "SERVICE SESSION DATA TRACING METHOD AND SYSTEM", which is incorporated herein by reference in its entirety. This application claims priority to Chinese Patent Application No. 202310538162.X, filed with the China National Intellectual Property Administration on May 12, 2023 and entitled "SERVICE SESSION DATA TRACING METHOD AND APPARATUS, AND RELATED DEVICE", which is incorporated herein by reference in its entirety.

### TECHNICAL FIELD

This application relates to the field of computer technologies, and in particular, to a service session data tracing method and apparatus, and a related device.

### BACKGROUND

A service system is a system that processes a service based on a pre-configured service processing flow. A user can manage and process a service by using the service system. The service processing flow in the service system is configured by the user based on a service processing requirement. The service processing flow usually includes a plurality of processing steps. When processing a service, the service system sequentially executes, based on the service processing flow, the processing steps included in the service processing flow, to implement service processing.

The service system generates service session data in a process in which the service system processes a service once based on the service processing flow. The service session data generated by the service system can be used to monitor a process in which the service system executes the service processing flow. Checking the service session data can find a running exception of the service system during execution of the service processing flow.

Currently, checking the service system based on the service session data affects normal running of the service system.

### SUMMARY

This application provides a service session data tracing method, so that adverse impact of checking a service system based on service session data on running of the service system can be reduced, and a target service flow can be intuitively displayed, to facilitate a user learning of a flow executed by the service system to process a service and tracing a progress. This application further provides a corresponding apparatus, a computer device cluster, a computer-readable storage medium, and a computer program product.

According to a first aspect, this application provides a service session data tracing method applied to a tracing system. The tracing system is used to trace a service system. The tracing system obtains, through a service flow information configuration interface, service flow configuration information input by a user. The service flow configuration information is used to configure a flow based on which the service system traced by using the tracing system processes a service. The service flow configuration information includes a plurality of service flow nodes, an execution sequence of the plurality of service flow nodes, and a data processing rule. The service flow node is used to represent steps of a service processing flow. The execution sequence of the plurality of service flow nodes can reflect the service processing flow. The data processing rule indicates the tracing system to process service session data generated by the service system. The data processing rule corresponds to at least one service flow node, so that when processing the service flow node, the tracing system processes data by using the data processing rule corresponding to the service flow node. The tracing system generates a target service flow based on the service flow configuration information. The target service flow corresponds to a service session flow in the service system. The tracing system can display the target service flow to the user, so that the user can intuitively learn of a service session flow of a service processed by the service system and the tracing system can trace a progress of the service session data. The tracing system executes, based on the service flow configuration information, the data processing rule corresponding to the at least one service flow node. A data processing rule corresponding to a first service flow node includes an original session data collection rule. Data processed based on the original session data collection rule is service session data generated by processing a service by the service system. In this way, the service session data can be processed based on the service flow configuration information, so that the service system can be traced. In addition, the service system does not need to cooperate with the tracing system to add an identifier. This reduces adverse impact of tracing the service system on running of the service system, and resolves a problem that the service system cannot add an identifier, resulting in the tracing system being unable to trace the service session data generated by the service system. The method can expand an application scenario of the tracing system, and also help the user learn of a tracing progress and a tracing result of the tracing system.

In some possible implementations, the tracing system further displays traced data. The traced data includes one or more of a node execution result, a flow execution result, and a data check result. The node execution result is an execution result of the service flow node. The flow execution result is an execution result of a service flow corresponding to the service flow configuration information. The data check result is a result obtained by checking processed data obtained by executing the data processing rule corresponding to the service flow node. Based on the displayed traced data, the user can easily and comprehensively learn of the tracing result and a service processing status of the service system.

In a possible implementation, the traced data is automatically triggered to be generated by the tracing system after the tracing system completes a tracing task for the service system. In another possible implementation, the tracing system obtains a query request that includes data information of the traced data. The data information includes one or more of session information, node information, and session step data information. The tracing system can determine to-be-queried traced data based on the data information. The tracing system obtains the traced data through querying based on the query request.

In some possible implementations, the service flow information configuration interface provides a plurality of service flow node diagram elements selectable by the user. The service flow node diagram elements correspond to service flow nodes. The tracing system receives the plurality of service flow node diagram elements and an execution sequence that are configured by the user through the service flow information configuration interface, then generates a service flowchart based on the plurality of service flow node diagram elements and the execution sequence. The service flow nodes corresponding to the service flow node diagram elements.

In the service flowchart correspond to a service processing step included in the service session flow in the service system. The execution sequence included in the service flowchart corresponds to a flow of the service processing step included in the service session flow in the service system.

In some possible implementations, the original session data collection rule includes a first collection path indicating a target data source for an original session data collection operation. The target data source is used to store the service session data generated by the service system. For example, the target data source includes one or any combination of a DB SQL database structured query language data source, a DB binlog database binary log data source, a RESTful RESTful interface data source, a NoSQL not only SQL database data source, a service log source, a service DB database data source, and a file data source. That the tracing system performs the original session data collection operation based on an original session data collection rule corresponding to the first service flow node includes: sending a service session data collection request to the service system; and receiving service session data fed back by the service system. In an example, the service session data collection request can be generated based on the first collection path.

In some possible implementations, the original session data collection rule further includes a query index creation rule. The tracing system processes the first service flow node, and during execution of the original session data collection rule that includes the query index creation rule and that corresponds to the first service flow node, converts the service session data into cached service session data, creates a query index of the cached service session data based on the cached service session data and a query index creation rule of the target data source, and finally writes the cached service session data and the query index into a cache database. The cache database belongs to the tracing system. The cached service session data matches the cache database in format. In this way, the tracing system can sort the obtained service session data, to generate the cached service session data. In addition, the tracing system can conveniently and accurately obtain the required cached service session data by querying the cache database by using the created query index, so that original session service data in different types of target data sources can be flexibly collected, to facilitate extension and adaptation to more data source types.

In some possible implementations, the data processing rule corresponding to the first service flow node further includes a session start data identification rule. The session start data identification rule is used to identify session start data. The session start data is used to determine that the service system starts to execute a service session flow. The first service flow node is a start node of the service session flow. The tracing system creates a first service session instance after processing the first service flow node, executing the session start data identification rule corresponding to the first service flow node, and identifying the session start data. A start node of the first service session instance is the first service flow node corresponding to the data processing rule that further includes the session start data identification rule. A target flow node is a service flow node determined, by the tracing system, to be executed from the first service flow node based on the service flow configuration information. The tracing system executes a data processing rule corresponding to the target flow node.

In some possible implementations, the plurality of service flow nodes include a second service flow node. A data processing rule corresponding to the second service flow node further includes a session step data processing rule. The session step data processing rule includes a second collection path. The second collection path includes one or two of the first collection path and the cache database. The second collection path indicates a storage location of collected session step data. When processing the second service flow node and executing a session step data processing rule corresponding to the second service flow node, the tracing system obtains a set of processed data, generates a query parameter based on a query rule and the set of processed data, and finally obtains the session step data by querying, based on the query parameter, a storage location indicated by the second collection path. The set of processed data includes one or two of the service session data and the processed data obtained by executing the data processing rule corresponding to the service flow node. The query rule is used to determine a query parameter for querying session step data. The tracing system can query the session step data based on the set of processed data set and the query rule.

In some possible implementations, the data processing rule further includes a data check rule. The data check rule indicates a check manner in which the tracing system checks the processed data obtained by executing the data processing rule corresponding to the service flow node. The tracing system performs, based on the data check rule, data check on the processed data obtained by executing the data processing rule corresponding to the service flow node, and obtains a data check result. The data check rule can be used to check processed data at a service flow node level, so that accuracy of data check and processing by the tracing system is improved.

In some possible implementations, the plurality of service flow nodes include a third service flow node. A data processing rule corresponding to the third service flow node includes a branch determining rule. There is an execution sequence of the third service flow node and a plurality of service flow nodes. That is, in the execution sequence, there are a plurality of service flow nodes that need to be executed next to the third service flow node. The tracing system can determine a next to-be-executed service flow node from the plurality of service flow nodes based on the branch determining rule, and select an included branch determined in the execution sequence. After determining the next to-be-executed service flow node, the tracing system can display a target service flow that includes the next to-be-executed service flow node, to help users learn of a branch of a flow executed by the tracing system.

In some possible implementations, the tracing system can further determine a breakpoint. In a process in which the tracing system processes a service flow node, if a breakpoint condition is met, the tracing system marks a currently processed service flow node as a breakpoint. Processing of a service flow node marked as a breakpoint is interrupted. In addition, when a resumption condition is met, the tracing system executes a data processing rule corresponding to the breakpoint. If the data processing rule corresponding to the breakpoint is successfully executed, the tracing system continues to process a next service flow node in the execution sequence. If failing to execute the data processing rule corresponding to the breakpoint, the tracing system continues to execute the data processing rule corresponding to the breakpoint again, when a resumption condition is met. The operation is repeated in this way until the data processing rule corresponding to the breakpoint is successfully executed or total duration for processing the breakpoint reaches a threshold. In this way, interrupted processing and reprocessing of a service flow node that meets the breakpoint condition can be implemented, so that the tracing system is applicable to a tracing scenario in which interruption processing is required, and an application scope of the tracing system is expanded.

According to a second aspect, this application provides a service session data tracing apparatus. The service session data tracing apparatus is used in a tracing system. The tracing system is used to trace a service system. The service session data tracing apparatus includes a service flow information configuration interface. The service session data tracing apparatus includes:
a service flow configuration information obtaining module, configured to obtain, through the service flow information configuration interface, service flow configuration information input by a user, where the service flow configuration information includes a plurality of service flow nodes, an execution sequence of the plurality of service flow nodes, and a data processing rule corresponding to at least one service flow node;
a target service flow generation module, configured to generate a target service flow based on the service flow configuration information, where the target service flow corresponds to a service session flow in the service system; and
a data processing rule execution module, configured to execute, based on the service flow configuration information, the data processing rule corresponding to the at least one service flow node, where a data processing rule corresponding to a first service flow node in the plurality of service flow nodes includes an original session data collection rule, and a data source for the original session data collection rule is service session data in the service system.

In some possible implementations, the apparatus further includes:
a display module, configured to display traced data, where the traced data includes one or more of a node execution result, a flow execution result, and a data check result, the node execution result is an execution result of the service flow node, the flow execution result is an execution result of a service flow corresponding to the service flow configuration information, and the data check result is a result obtained by checking processed data obtained by executing the data processing rule corresponding to the service flow node.

In some possible implementations, the service flow information configuration interface provides a plurality of service flow node diagram elements selectable by the user, and the service flow node diagram elements correspond to service flow nodes; and that the service flow configuration information obtaining module is configured to obtain, through the service flow information configuration interface, the service flow configuration information input by the user includes:
the service flow configuration information obtaining module is specifically configured to: receive the plurality of service flow node diagram elements and an execution sequence that are configured by the user through the service flow information configuration interface; and generate a service flowchart, where the service flow nodes corresponding to the service flow node diagram elements in the service flowchart, and the execution sequence corresponds to the service session flow in the service system.

In some possible implementations, the original session data collection rule includes a first collection path, and the first collection path indicates a target data source for an original session data collection operation; and that the data processing rule execution module is configured to execute the data processing rule corresponding to the service flow node includes:
the data processing rule execution module is configured to: send a service session data collection request to the service system; and receive service session data sent by the service system, where the service session data is stored in the target data source of the service system, and the target data source includes one or any combination of a DB SQL database structured query language data source, a DB binlog database binary log data source, a RESTful RESTful interface data source, a NoSQL not only SQL database data source, a service log source, a service DB database data source, and a file data source. In some possible implementations, the original session data collection rule further includes a query index creation rule; and that the data processing rule execution module is configured to execute the data processing rule corresponding to the service flow node includes:
the data processing rule execution module is specifically configured to: convert the service session data into cached service session data, where the cached service session data matches a cache database of the tracing system in format; create a query index of the cached service session data based on the cached service session data and a query index creation rule of the target data source; and write the cached service session data and the query index into the cache database.

In some possible implementations, the data processing rule further includes a session start data identification rule corresponding to the first service flow node, the first service flow node is a start node of the service session flow, and the service session data is start session data of the service session flow; and that the data processing rule execution module is configured to execute, based on the service flow configuration information, the data processing rule corresponding to the service flow node includes:
the data processing rule execution module is specifically configured to: create a first service session instance, where a start node of the first service session instance is the first service flow node; and execute a data processing rule corresponding to a target flow node, where the target flow node is a service flow node determined to be executed from the first service flow node based on the service flow configuration information.

In some possible implementations, the data processing rule further includes a session step data processing rule corresponding to a second service flow node in the plurality of service flow nodes, the session step data processing rule includes a second collection path, and the second collection path includes the first collection path; and that the data processing rule execution module is configured to execute the data processing rule corresponding to the service flow node includes:
the data processing rule execution module is specifically configured to: obtain a set of processed data, where the set of processed data includes one or two of the service session data and the processed data obtained by executing the data processing rule corresponding to the service flow node; generate a query parameter based on a query rule and the set of processed data; and obtain session step data by querying, based on the query parameter, a storage location indicated by the second collection path. In some possible implementations, the data processing rule further includes a session step data processing rule corresponding to a second service flow node, the session step data processing rule includes a second collection path, and the second collection path includes one or two of the first collection path and the cache database; and that the data processing rule execution module is configured to execute the data processing rule corresponding to the service flow node includes:
the data processing rule execution module is specifically configured to: obtain a set of processed data, where the set of processed data includes one or more of the service session data, the cached service session data, and the processed data obtained by executing the data processing rule corresponding to the service flow node; generate a query parameter based on a query rule and the set of processed data; and obtain session step data by querying, based on the query parameter, a storage location indicated by the second collection path.

In some possible implementations, the data processing rule further includes a data check rule; and that the data processing rule execution module is configured to execute, based on the service flow configuration information, the data processing rule corresponding to the service flow node includes:
the data processing rule execution module is specifically configured to: perform, based on the data check rule, data check on the processed data obtained by executing the data processing rule corresponding to the service flow node; and obtain a data check result.

In some possible implementations, the data processing rule further includes a branch determining rule corresponding to a third service flow node, and there is an execution sequence of the third service flow node and a plurality of service flow nodes; and that the data processing rule execution module is configured to execute, based on the service flow configuration information, the data processing rule corresponding to the service flow node includes:
the data processing rule execution module is specifically configured to: determine, from the plurality of service flow nodes based on the branch determining rule corresponding to the third service flow node, a next to-be-executed service flow node; and display the target service flow including the service flow node.

In some possible implementations, the apparatus further includes:
a breakpoint processing module, configured to: if a breakpoint condition is met, mark a currently processed service flow node as a breakpoint; repeatedly execute, in response to meeting a resumption condition, a data processing rule corresponding to the breakpoint until the data processing rule corresponding to the breakpoint is successfully executed or total duration for processing the breakpoint reaches a threshold; and if the data processing rule corresponding to the breakpoint is successfully executed, continue to process a next service flow node in the execution sequence.

In some possible implementations, the apparatus further includes:
a query module, configured to: before displaying the traced data, obtain a query request, where the query request includes data information of the traced data, and the data information includes one or more of session information, node information, and session step data information; and obtain the traced data through querying based on the data information.

According to a third aspect, this application provides a computing device cluster. The computing device cluster includes at least one computing device. The at least one computing device includes at least one processor and at least one memory. The at least one memory is configured to store instructions. The at least one processor executes the instructions stored in the at least one memory, to enable the computing device cluster to perform the service session data tracing method according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fourth aspect, this application provides a computer-readable storage medium. The computer-readable storage medium stores instructions. When the instructions are run on at least one computing device, the at least one computing device is enabled to perform the method according to any one of the first aspect or the implementations of the first aspect.

According to a fifth aspect, this application provides a computer program product including instructions. When the computer program product runs on at least one computing device, the at least one computing device is enabled to perform the method according to any one of the first aspect or the implementations of the first aspect.

Based on the implementations provided in the foregoing aspects, this application may further combine technologies in this application to provide more implementations.

### BRIEF DESCRIPTION OF DRAWINGS

FIG. 1 is a diagram of a system architecture according to an embodiment of this application;
FIG. 2 is a diagram of another system architecture according to an embodiment of this application;
FIG. 3 is a diagram of an example application scenario according to an embodiment of this application;
FIG. 4 is a diagram of another example application scenario according to an embodiment of this application;
FIG. 5 is a schematic flowchart of a service session data tracing method according to an embodiment of this application;
FIG. 6 is a diagram of a structure of a tracing system according to an embodiment of this application;
FIG. 7 is a diagram of a data composition structure of a service flowchart according to an embodiment of this application;
FIG. 8 is a diagram of a target service flow according to an embodiment of this application;
FIG. 9 is a diagram of displaying a target service flow according to an embodiment of this application;
FIG. 10 is another diagram of displaying a target service flow according to an embodiment of this application;
FIG. 11A to FIG. 11C are a diagram of a flow of interaction between a session tracing module and a data collection module according to an embodiment of this application;
FIG. 12 is a diagram of a data structure of breakpoint data according to an embodiment of this application;
FIG. 13A and FIG. 13B are a schematic flowchart of breakpoint processing according to an embodiment of this application;
FIG. 14 is a diagram of a structure of a service session data tracing apparatus according to an embodiment of this application;
FIG. 15 is a diagram of a structure of a computing device according to an embodiment of this application;
FIG. 16 is a diagram of a structure of a computing device cluster according to an embodiment of this application; and
FIG. 17 is a diagram of a manner of connection between computing devices in a computing device cluster according to an embodiment of this application.

### DESCRIPTION OF EMBODIMENTS

The following describes the solutions in embodiments provided in this application with reference to the accompanying drawings in this application.

The terms "first", "second", and the like in the specification, claims, and accompanying drawings of this application, are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

Service session data generated by a service system in a process of processing a service based on a service processing flow can be used to monitor the process in which the service system processes a service. The service session data is service processing-related data generated by processing a service once. For example, the service session data includes one or two of service data and a trace log. The service data is service-related data generated by processing a service by the service system. The service system can directly send the service data to a tracing system, so that the tracing system can check the service data and trace the service processed by the service system. The service system can further record the generated service data or a service processing process in the trace log. The tracing system can collect and check the trace log, monitor a service processing flow of the service system, and trace service processing by the service system.

Currently, to distinguish service session data generated by processing a service for different times, the service system allocates a corresponding identifier to service session data generated by processing a service each time. For example, when starting to execute the service processing flow, the service system allocates an identifier to service session data generated by executing the service processing flow this time. The identifier is, for example, a trace identifier (trace identifier, trace ID) or a session identifier. A session is a process in which the service system executes the service processing flow once. Starting from service processing, the service system carries an identifier in service session data generated in each step of the service processing flow, and transfers the identifier in the service processing process. The service system sends the service session data including the identifier to the tracing system. The tracing system can obtain service session data sent by the service system. Based on the identifier, the tracing system can determine service session data corresponding to service processing once, and check the service session data, to monitor service processing of the service system and detect a problem of the service system in a timely manner.

To enable the tracing system to monitor the service processing process, the service system needs to be configured with an additional identifier. The identifier is not data required or generated by the service system to process a service. In this case, the service system is intrusive. As a result, service processing performance of the service system is reduced, and normal running of the service system is affected. In addition, in some cases, a process in which the service system processes a service relates to a process in which an identifier cannot be added, for example, interaction with a user, interaction with an external system, and triggering of a scheduled task. The service processing flow is divided into a plurality of phases. The service system cannot mark a complete service processing flow, namely, a session process. As a result, the tracing system cannot check a complete service session and monitor an exception.

In view of this, an embodiment of this application provides a service session data tracing method. The method can be applied to a tracing system. The tracing system is used to trace a service system. The tracing system includes a service flow information configuration interface. A user can configure service flow configuration information through the service flow information configuration interface. The service flow configuration information includes a plurality of service flow nodes, an execution sequence of the plurality of service flow nodes, and a data processing rule corresponding to at least one service flow node. The tracing system generates a target service flow based on the service flow configuration information. The target service flow corresponds to a service session flow in the service system. Based on the target service flow, the user can intuitively learn of a service processing flow in the service system and the tracing system can trace a progress of service session data. The tracing system executes, based on the service flow configuration information, the data processing rule corresponding to the at least one service flow node. A data processing rule corresponding to a first service flow node included in the plurality of service flow nodes includes an original session data collection rule. A data source for the original session data collection rule is the service session data in the service system. In this way, the tracing system can obtain the service session data in the service system based on a data processing rule of the plurality of service flow nodes including the first service flow node, and can monitor, according to the execution sequence of the service flow nodes, a service processing process of the service system, to trace the service system. According to the service session data tracing method provided in this application, the service system does not need to cooperate with the tracing system to add an identifier. This reduces adverse impact of tracing the service system on running of the service system, resolves a problem that the service system cannot add an identifier, resulting in the tracing system being unable to trace the service session data generated by the service system, expands an application scenario of the tracing system, and facilitates the user to learn of a tracing progress and a tracing result of the tracing system.

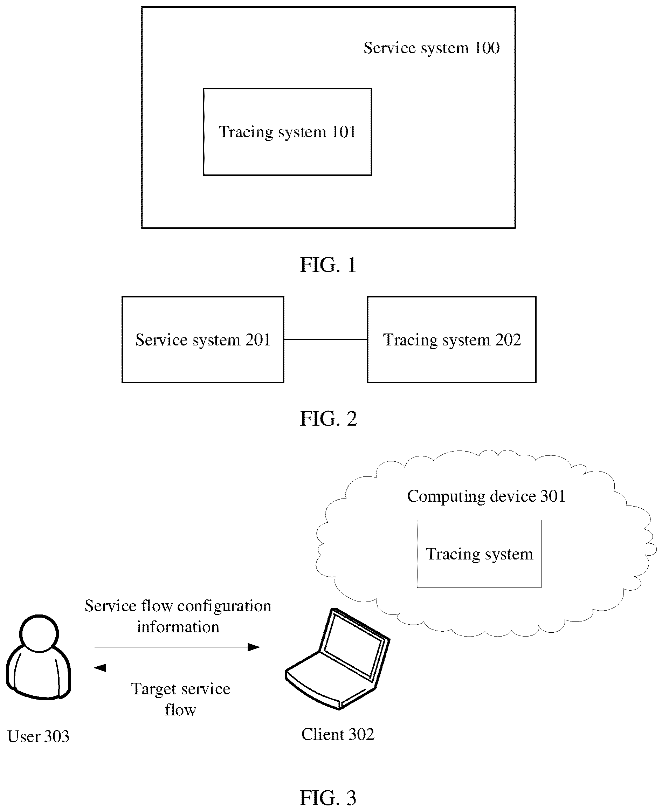

The following describes a system architecture related to the service session data tracing method provided in embodiments of this application. FIG. 1 and FIG. 2 are diagrams of possible system architectures according to an embodiment of this application. It should be noted that the system architectures shown in FIG. 1 and FIG. 2 are merely example implementations provided in embodiments of this application. An application scenario of the service session data tracing method provided in embodiments of this application is not limited to the system architecture shown in FIG. 1 or FIG. 2.

The service session data tracing method provided in this application is applied to the tracing system. The tracing system is a system that traces a service system based on service session data.

In a possible implementation, the tracing system belongs to the service system. FIG. 1 is a diagram of a structure of a service system according to an embodiment of this application. The service system 100 includes a tracing system 101. The service system 100 is used to process a service, to generate service session data. The tracing system 101 can generate, based on service flow configuration information input by a user through a service flow information configuration interface, a target service flow corresponding to a service session flow in the service system 100, execute, based on the service flow configuration information, a data processing rule corresponding to at least one service flow node, and obtain original service session data generated by the service system 100, to trace the service system 100.

In another possible implementation, the tracing system and the service system are independent of each other. FIG. 2 is a diagram of a structure of a service system and a tracing system according to an embodiment of this application. The service system 201 is connected to the tracing system 202. The tracing system 202 can generate, based on service flow configuration information input by a user through a service flow information configuration interface, a target service flow corresponding to a service session flow in the service system 201, execute, based on the service flow configuration information, a data processing rule corresponding to at least one service flow node, and obtain service session data generated by the service system 201, to trace the service system 201.

In an example, the tracing system may be deployed on a cloud to provide a cloud service of a tracing service system for the user. For example, in an application scenario shown in FIG. 3, the tracing system may be specifically a computing device 301 (or a computing device cluster) located in a cloud. In addition, the computing device 301 may exhibit a client 302, configured to implement interaction with a user 303, for example, obtain service flow configuration information input by the user 303 through a service flow information configuration interface, and display a target service flow to the user 303. In an actual application, the client 302 may be, for example, an application running on a user-side device, or a network browser exhibited by the computing device 301.

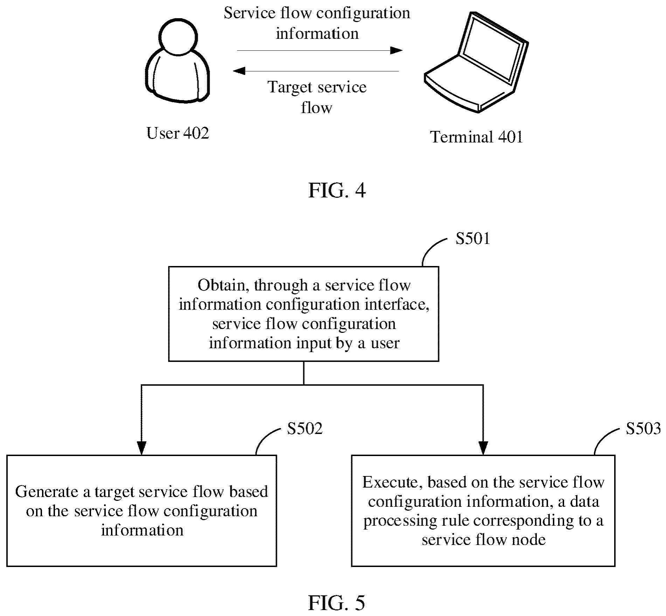

In another example, the tracing system may be deployed locally, to provide a local service system monitoring service for the user. For example, in an application scenario shown in FIG. 4, the tracing system is specifically applied to a terminal 401. The terminal 401 may obtain service flow configuration information input by a user 402 through a service flow information configuration interface, and trace a service system based on the service flow configuration information.

The following describes a service session data tracing method provided in an embodiment of this application. FIG. 5 is a schematic flowchart of a service session data tracing method according to an embodiment of this application. The method includes the following steps.

S501: Obtain, through a service flow information configuration interface, service flow configuration information input by a user.

The service flow information configuration interface is an interface that is included in a tracing system and that is used to obtain the service flow configuration information. The user who uses the tracing system can input the service flow configuration information by invoking the service flow information configuration interface. The service flow configuration information is information about a service processing flow in a service system, and indicates the tracing system to obtain service session data and trace the service system.

The service flow configuration information includes a plurality of service flow nodes, an execution sequence of the plurality of service flow nodes, and a data processing rule corresponding to at least one service flow node. The service flow node is a node that indicates the service processing flow. In some examples, the service flow node can be a flow node included in a process in which the service system processes a service session. The execution sequence of the plurality of service flow nodes indicates a sequence of executing the plurality of service flow nodes. The execution sequence of the plurality of service flow nodes can be determined based on the service processing flow in the service system, and can also reflect an association relationship between service session data generated or used in different steps in a service processing process of the service system. The service flow configuration information includes a data processing rule. The data processing rule corresponds to at least one service processing node. The data processing rule indicates a manner of processing data. The user can configure the data processing rule based on a service session data processing requirement of the service system.

A manner of generating the service flow configuration information is not limited in embodiments of this application. In a possible implementation, the service flow configuration information is generated in the service system or another system that can edit the service flow configuration information, and is input by the user into the tracing system through the service flow information configuration interface. In some cases, the tracing system can support processing of the service flow configuration information in a preset data format. If the service flow configuration information input by the user is not in the preset data format, the tracing system first performs data format conversion on the service flow configuration information input by the user, to obtain the service flow configuration information in the preset data format. In another possible implementation, the service flow information configuration interface of the tracing system provides a function of editing the service flow configuration information. The user accesses an editing page through the service flow information configuration interface. The user can edit the service flow configuration information on the editing page, and after editing the service flow configuration information, trigger the service flow configuration information to be input into the tracing system.

A specific form of the service flow configuration information is not limited in embodiments of this application. In a possible implementation, the service flow configuration information is configuration data of a service flow. In another possible implementation, the service flow configuration information can be a service flowchart.

For example, the service flow configuration information is the service flowchart. In this case, the service flow information configuration interface can provide a plurality of service flow node diagram elements
for the user. A manner in which the service flow information configuration interface provides the plurality of service flow node diagram elements for the user is not limited in embodiments of this application. In an example, the service flow information configuration interface provides a service flow node diagram element database for the user. A service provided by the service flow information configuration interface displays the editing page to the user. The service flow node diagram element database can be displayed on the editing page. The service flow node diagram element database includes the plurality of service flow node diagram elements. The user can select a desired service flow node diagram element from the service flow node diagram element database.

Different types of service flow node diagram elements correspond to different functions of service flow nodes. Specifically, service flow nodes corresponding to some types of service flow node diagram elements have corresponding data processing rules. The data processing rule corresponding to the service flow node matches a function of the service flow node.

In an example, the plurality of service flow node diagram elements include one or more of a start node diagram, a session step data processing node diagram, a branch determining node diagram, and a sub-flow node diagram.

The start node diagram corresponds to a start node. The start node is a start node of a service session flow and is used to trigger continued processing of the service flow configuration information. A data processing rule corresponding to the start node includes an original session data collection rule and a session start data identification rule. The session step data processing node diagram corresponds to one session step processing node. The session step data processing node is configured to process session step data. A data processing rule corresponding to the session step data processing node includes a session step data processing rule. Specifically, the session step data processing node includes a session step data collection node and a session step data conversion node. The session step data collection node is used to collect session step data. The session step data conversion node is used to convert the session step data. The branch determining node diagram corresponds to branch determining nodes. The branch determining node is used to determine a service flow node that needs to be executed later. A data processing rule corresponding to the branch determining node includes a branch determining rule. The sub-flow node diagram corresponds to sub-flow nodes. The sub-flow node is used to invoke reusable service flow configuration information. The sub-flow node can simplify complexity of flow management. A flow identifier, a list of sub-flow input parameters, and a list of sub-flow output parameters that are of the sub-flow node are configured in current service flow configuration information in advance, so that historical reusable service flow configuration information corresponding to the sub-flow node is conveniently invoked based on the flow identifier. The list of sub-flow input parameters and the list of sub-flow output parameters are used to define input parameters that need to be processed by the sub-flow node and output parameters obtained through processing.

The service flow node diagram element and the service flow node corresponding to the service flow node diagram element are merely used as an example. A type of the service flow node diagram element is not limited in embodiments of this application, and can be arranged by a person skilled in the art based on a requirement.

This embodiment of this application provides a specific implementation of obtaining, through the service flow information configuration interface, the service flow configuration information input by the user. The implementation includes the following two steps.

A1: Receive the plurality of service flow node diagram elements and an execution sequence that are configured by the user through the service flow information configuration interface.

The user configures the plurality of service flow node diagram elements and the execution sequence by invoking the service flow information configuration interface. In a possible implementation, the user can select the plurality of service flow node diagram elements on the editing page provided by the service flow information configuration interface, and edit the execution sequence of the plurality of service flow node diagram elements. In another possible implementation, the user inputs, through the service flow information configuration interface, a configuration parameter used to configure the plurality of service flow node diagram elements and the execution sequence.

In addition, the user can configure data processing rules corresponding to the service flow nodes corresponding to the service flow node diagram element.

A2: Generate a service flowchart, where the service flow nodes corresponding to the service flow node diagram elements in the service flowchart, and the execution sequence corresponds to the service session flow in the service system.

The tracing system generates a service flowchart based on the received plurality of service flow node diagram elements and the received execution sequence. The service flowchart includes service flow node diagram elements and an execution sequence. The service flowchart is obtained by orchestrating, in a form of a directed diagram, a service processing flow that needs to be processed by the service system. The service flowchart corresponds to the service session flow in the service system. Service flow nodes corresponding to the service flow node diagram element correspond to a step executed in the service session flow in the service system. The execution sequence corresponds to a process of executing the service session flow in the service system. The service flowchart can restore the service processing flow in the service system. In this way, the tracing system can process, with reference to the service flowchart, original service session data generated by the service system, to implement tracing of the service system.

In some possible implementations, the service flowchart further includes a flow identifier and a flow name. The flow identifier is used to uniquely identify a service flow data flow diagram. The flow name is a name of the service flow data flow diagram.

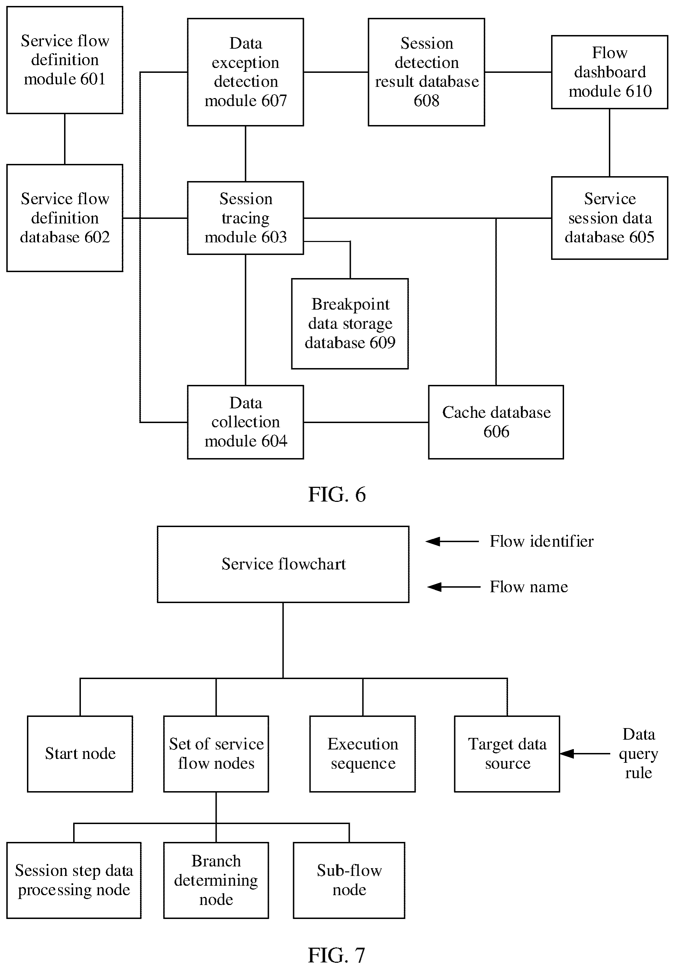

In an example, an embodiment of this application provides a diagram of a data composition structure of a service flowchart. As shown in FIG. 7, the service flowchart mainly includes the following content:
a flow identifier: an identifier for uniquely identifying a service flowchart;
a flow name: a name of the service flowchart;
a start node: corresponding to an original service data collection rule and a session start data identification rule; and
a set of service flow nodes: a set of service flow nodes other than a start node in service flow nodes that constitute service flowcharts, where in an example, the set of service flow nodes includes a session step data processing node, a branch determining node, and a sub-flow node; and the session step data processing node includes a session step data collection node and a session step data conversion node;
execution sequence: defining an execution sequence of service flow nodes, where the execution sequence includes sequential execution, branch determining, parallel branches, parallel branch merging and loop, and the like; and
a target data source: defining a target data source for collecting service session data from the service system and a query rule for querying data from the target data source, where there are a plurality of types of target data sources; and details are provided in the following descriptions.

In an example, FIG. 6 is a diagram of a structure of the tracing system according to this embodiment of this application. The tracing system 600 includes a service flow definition module 601, a service flow definition database 602, a session tracing module 603, a data collection module 604, a service session data database 605, a cache database 606, a data exception detection module 607, a session detection result database 608, a breakpoint data storage database 609, and a flow dashboard module 610.

The service flow definition module 601 is connected to the service flow definition database 602. The service flow definition database 602 is connected to the service flow definition module 601, the session tracing module 603, the data collection module 604, and the data exception detection module 607. The session tracing module 603 is connected to the service flow definition database 602, the data collection module 604, the service session data database 605, the cache database 606, the data exception detection module 607, and the breakpoint data storage database 609. The data collection module 604 is connected to the service flow definition database 602, the session tracing module 603, and the cache database 606. The service session data database 605 is connected to the session tracing module 603 and the flow dashboard module 610. The cache database 606 is connected to the session tracing module 603 and the data collection module 604. The data exception detection module 607 is connected to the session tracing module 603 and the session detection result database 608. The session detection result database 608 is connected to the data exception detection module 607 and the flow dashboard module 610. The breakpoint data storage database 609 is connected to the session tracing module 603. The flow dashboard module 610 is connected to the service session data database 605 and the session detection result database 608.

The service flow definition module 601 is configured to obtain, through the service flow information configuration interface, the service flow configuration information input by the user. The service flow configuration information obtained by the tracing system 600 is stored in the service flow definition database 602 of the tracing system 600. The user can access the service flow definition database 602 to view and modify, in a visual manner, the service flow configuration information that has been input into the tracing system 600.

The following describes other modules and databases included in the tracing system 600.

S502: Generate a target service flow based on the service flow configuration information.

The service flow configuration information includes information indicating the service system to process a service session flow. The tracing system can generate the target service flow based on the service flow configuration information. The target service flow corresponds to a service session flow in the service system. Target flow nodes specifically include service flow nodes and an execution sequence of the service flow nodes. Based on the target service flow, the user can intuitively learn of a service processing flow and progress of the service system traced by using the tracing system.

In an example, with reference to FIG. 6, the session tracing module 603 is configured to: obtain the service flow configuration information from the service flow definition database 602, and generate the target service flow based on the service flow configuration information. The session tracing module 603 stores the target service flow in the service session data database 605 in a form of a flowchart. The flow dashboard module 610 can obtain the target service flow from the service session data database 605, and display the target service flow to the user, so that the user learns of a flow executed by the service system to process a service and a tracing progress.

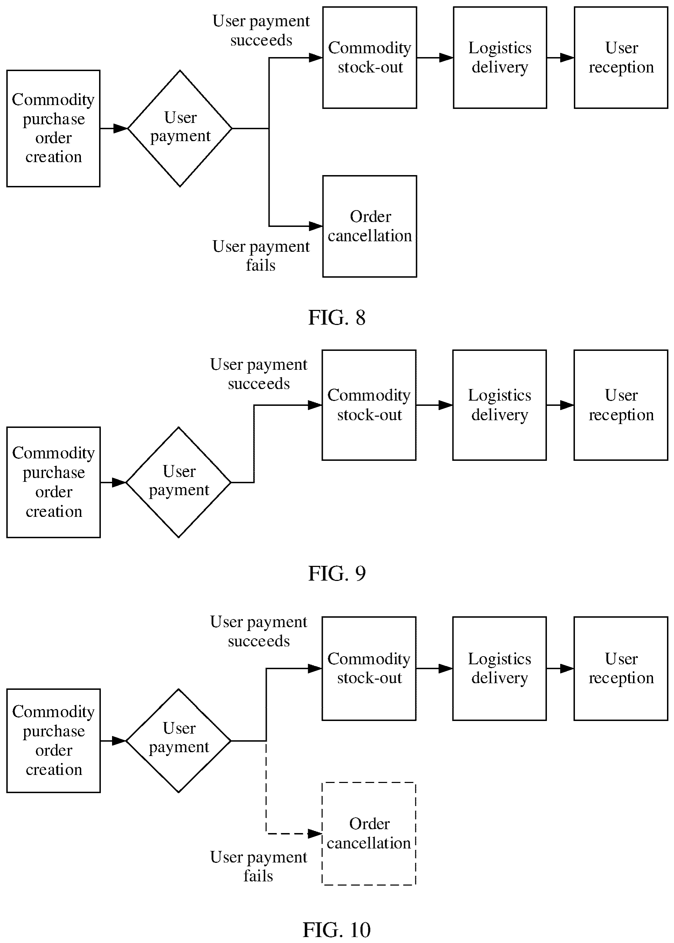

In an example, a service that needs to be processed by the service system is a commodity purchase service. For the target service flow generated based on the service flow configuration information, refer to FIG. 8. The target service flow includes sixth nodes: commodity purchase order creation, user payment, commodity stock-out, logistics delivery, user reception, and order cancellation. An execution process is specifically: first creating a commodity purchase order, and then triggering user payment. If the user payment succeeds, the commodity stock-out node, the logistics delivery node, and the user reception node are sequentially executed. If the user payment fails, the order cancellation node is executed.

S503: Execute, based on the service flow configuration information, the data processing rule corresponding to the service flow node.

The tracing system can determine, based on the plurality of service flow nodes and the execution sequence of the plurality of service flow nodes that are included in the service flow configuration information, a service flow node that needs to be executed. When the service flow node that needs to be executed has a corresponding data processing rule, the tracing system executes the data processing rule corresponding to the service flow node, to process service session data obtained from the service system and trace the service system.

In a process in which a service is processed once, the service system generates service session data along with execution of a service processing flow. The tracing system needs to obtain the service session data generated by the service system to trace a service session. The plurality of service flow nodes included in the service flow configuration information include a first service flow node. A data processing rule corresponding to a first service flow node includes an original session data collection rule.

The original session data collection rule indicates a tracing model to collect original service session data from the service system. In an example, the original session data collection rule includes a rule related to service session data collection and a rule for processing service session data after collection, such as a manner of connecting target data sources, a data collection rule, a conversion method for collected data and an output data structure, whether collected data is stored in a cache database, and a cache expiration and eviction rule. The tracing system can obtain the original service session data from the service system based on the original session data collection rule corresponding to the first service flow node, to subsequently process the original service session data and trace the service system.

It should be noted that a sequence of performing S502 and S503 is not limited in embodiments of this application. The tracing system can first perform S502, and then perform S503; or first perform S503, and then perform S502; or simultaneously perform S502 and S503. This is not limited in embodiments of this application.

After executing the data processing rule corresponding to the service flow node data, the tracing system can store the generated or used data in a set of processed data. The set of processed data includes data used or generated by the tracing system to process the service flow configuration information this time. In an example, the set of processed data includes one or two of service session data and processed data obtained by executing the data processing rule corresponding to the service flow node. A form of the set of processed data is not limited in embodiments of this application. In a possible implementation, the set of processed data is a set of session context data.

The tracing system shown in FIG. 6 is used as an example. The session tracing module 603 stores, in a set of processed data included in the service session data database 605, processed data obtained by processing a flow node. The service session data database 605 is configured to store the processed data obtained by processing the service flow node.

In a possible implementation, processed data obtained by processing service flow nodes of one piece of service flow configuration information belongs to a same set of processed data. Processed data obtained by processing each service flow node has an identifier of the service flow node, so that the processed data is subsequently obtained by querying the identifier of the service flow node. The set of processed data has a flow identifier of the service flow configuration information or an instance identifier of a created service session instance, so that the set of processed data obtained by processing the service flow configuration information this time is subsequently obtained by querying the flow identifier or the instance identifier.

In an example, service session data of a session stored in the service session data database includes a flow identifier, a session instance identifier, a set of processed data, and a list of identifiers of currently executed flow nodes. The set of processed data includes processed data generated based on a processed service flow node. Specific content included in the service session data can be defined in the service flow configuration information.

Original service session data with different data sources has corresponding original session data collection rules. This embodiment of this application provides two different original session data collection rules and implementations of executing the two different original session data collection rules. For details, refer to the following descriptions.

In an example, with reference to FIG. 6, the session tracing module 603 is configured to: obtain the service flow configuration information from the service flow definition database 602, and execute, based on the service flow configuration information, a data processing rule corresponding to at least one service flow node.

Specifically, the session tracing module 603 processes, based on the service flow configuration information, the original session data collection rule corresponding to the first service flow node. The session tracing module 603 invokes the data collection module 604 based on the original session data collection rule. The data collection module 604 is configured to: in response to invocation by the session tracing module 603, obtain original service session data from a data source of the service system based on the original session data collection rule, and send the collected service session data to the session tracing module 603. The session tracing module 603 is further specifically configured to: obtain the service session data from the data source of the service system by using the data collection module 604, and process the obtained service session data.

In this way, the service system allows the tracing system to obtain the service session data, that is, trace the service session data. This avoids a case in which the service system configures data other than service session data such as an identifier to support monitoring by the tracing system. In a service session data processing manner provided in this embodiment of this application, running logic of the service system is not intruded, and a plug-in does not need to be integrated into the service system or an agent does not need to be installed in the service system to implement transmission of the service session data. This reduces impact on service processing performance and normal running of the service system. In addition, this resolves a problem that in some scenarios, the service system cannot configure an identifier for complete service session data, resulting in the tracing system being unable to check a complete session and monitor an exception, and expands and a use scope of service session data tracing.

There are a large quantity of types of service session data generated by the service system. Data sources of different types of service session data may be different, and manners of transmitting the service session data may also be different. This embodiment of this application provides two original session data collection rules. Different original session data collection rules indicate a manner of collecting original service session data with different collection requirements.

In a possible implementation, the original session data collection rule includes a first collection path. The first collection path indicates a target data source for obtaining the original service session data. The target data source is, for example, one or any combination of data sources for storing service session data in the service system, such as a database (database, DB) data source, a file data source, a log data source, a RESTful (Representational State Transfer, REST)-ful interface data source, or a NoSQL (not only SQL, not only SQL) database. The DB data source includes a DB database structured query language (Structured Query Language, SQL) data source and a DB binary log (binlog) data source. A specific type of the data source is not limited in embodiments of this application, and another type of data source can be extended based on a feature of the service system.

Correspondingly, when processing the first service flow node corresponding to the original session data collection rule that includes the first collection path, the tracing system sends a service session data collection request to the service system. The service session data collection request can be generated based on the first collection path. In an example, the service session data collection request can include an identifier of the target data source indicated by the first collection path. In some cases, the first collection path may further indicate a specific storage location of the service session data in the target data source. A range of the storage location is not limited in embodiments of this application. In an example, the storage location is, for example, a location at which the target data source stores a file of the service session data. The service system can obtain the stored service session data from the target data source based on the service session data collection request, and send the service session data to the tracing system. The tracing system receives service session data sent by the service system in response to the service session data collection request.

In a possible implementation, some target data sources in the service system do not support the tracing system in collecting service session data. After generating service session data, the service system pushes the service session data to the tracing system. Alternatively, the tracing system needs to further cache service collected from the service system. The original session data collection rule includes a query index creation rule in addition to the first collection path. When executing the original session data collection rule, the tracing system converts the obtained service session data to the cached service session data. The service session data can be sent by the service system to the tracing system in response to the service session data collection request of the tracing system, or proactively triggered to be sent to the tracing system by the service system. The cached service session data matches the cache database of the tracing system in format.

A specific implementation in which the tracing system converts the service session data into the cached service session data is not limited in embodiments of this application. In an example, the tracing system first cleans the service session data, and then converts a data format of the cleaned service session data to obtain the cached service session data that matches the cache database of the tracing system in format.

The tracing system creates a query index of the cached service session data based on the cached service session data and a query index creation rule of the target data source. In some implementations, the query index needs to be created based on a data query rule of the target data source indicated by the first collection path. In some examples, the data query rule of the target data source includes a list of input parameters for querying data, a rule for querying data from the cache database, and a rule for directly connecting to the target data source to query data. The query index created by the tracing system can be used to query, based on the query index, cached service session data that needs to be processed during subsequent processing of a service flow node, to improve performance of service session tracing. The tracing system writes the cached service session data and the query index into the cache database. The cache database is a database of the tracing system and is used to store the cached service session data. In this way, the tracing system can sort the service session data, and can conveniently and accurately obtain the required cached service session data by querying the cache database, so that original session service data in different types of target data sources can be flexibly collected, to facilitate extension and adaptation to more data source types.

In some implementations, the service session data includes session start data and session step data. The session start data is service session data generated by starting processing of a service session by the service system. Specific content of the session start data is not limited in embodiments of this application. The session start data may include one or more parameters. The session start data can be used to distinguish sessions of a single service. To be specific, after the session start data is detected, it can be determined that a service processing flow has been executed. The session step data is service session data other than the session start data. The session step data is service session data generated by executing other steps of a service processing flow than a start step. There is an association relationship between service session data before and after an execution sequence. In an example, a service that needs to be processed by the service system is a commodity purchase service. A service processing flow includes commodity purchase order creation, user payment, commodity stock-out, logistics delivery, user reception, and order cancellation. According to the service processing flow, service data obtained by purchasing a commodity once belongs to a piece of service session data. Order data of a created commodity purchase order is session start data. Service session data generated during payment, commodity stock-out, logistics delivery, user reception, and order cancellation is session step data.

In order to process the service flow configuration information, the data processing rule further includes a session start data identification rule corresponding to the first service flow node. The session start data identification rule is used to identify session start data. The first service flow node corresponding to the session start data identification rule is a start node of the service session flow, and is a first executed service flow node in the execution sequence. Specifically, the session start data identification rule includes, for example, a field of the session start data. The tracing system obtains the service session data from the target data source indicated by the first collection path. The service session data may include session start data and other service session data. The tracing system then identifies and determines the session start data from the service session data based on the session start data identification rule.

An implementation in which the tracing system processes the start node and executes the original session data collection rule and the session start data identification rule is not limited in embodiments of this application. In an example, the tracing system obtains a tracing start instruction triggered by the user. The tracing system starts to process the start node based on the obtained instruction and the service flow configuration information. In another example, after obtaining the service flow configuration information, the tracing system periodically processes the start node until a quantity of processing times is reached, or the session start data is obtained after the processing is completed.

When the session start data is obtained, it indicates that the service system starts to process this service. The tracing system creates a service session instance. A start node of the service session instance is a first service flow node that is used as a start node. After creating the service session instance, the tracing system determines, based on the service flow configuration information, a service flow node that needs to be executed after the start node, and executes a data processing rule corresponding to the service flow node that needs to be executed. A service flow node, determined, based on the service flow configuration information, to require subsequent execution starting from a start node, may also be referred to as a target flow node. The target flow node is a subsequent service flow node that needs to be executed and that is determined based on a service flow node and an execution sequence that are included in the service flow configuration information. A quantity of target flow nodes and a type of the target flow node are both determined based on the service flow configuration information.

The tracing system shown in FIG. 6 is used as an example. The session tracing module 603 obtains the service flow configuration information from the service flow definition database 602. The session tracing module 603 determines a start node based on the obtained service flow configuration information, and executes a data processing rule corresponding to the start node. The session tracing module 603 sends an original session start data obtaining request to the data collection module 604 based on the original session data collection rule. The data collection module 604 obtains the original session data collection rule from the service flow configuration information of the service flow definition database 602, and collects the original session start data based on the original session data collection rule. The data collection module 604 identifies, based on the session start data identification rule, session start data included in original session data. The data collection module 604 pushes the identified session start data to the session tracing module 603. In some possible implementations, the data collection module 604 sends the collected session start data and a flow identifier of the service flow configuration information together to the session tracing module 603. The session tracing module 603 determines, based on the flow identifier, service flow configuration information to which the detected session start data belongs, and creates a corresponding service session instance and a service session instance identifier. The service session instance identifier is used to identify a service session instance.

In some implementations, the plurality of service flow nodes further include second service flow node data. A data processing rule corresponding to the second service flow node data includes a session step data processing rule. The session step data processing rule is used to process session step data.

In a possible implementation, the session step data processing rule is used to collect session step data. The session step data processing rule includes a second collection path. The second collection path indicates a storage location of the session step data. It should be noted that the second collection path can include a plurality of storage locations, and collection priorities of different storage locations are different. A storage location with a higher priority is queried first. The tracing system obtains, based on the session step data processing rule, the session step data from the storage location indicated by the second collection path, to subsequently process the session step data.

The second collection path includes the first collection path, or in a case in which the tracing system establishes a cache database, the second collection path includes one or more of the first collection path and the cache database.

In some cases, the storage location indicated by the second collection path stores only session step data. The tracing system can generate a session step data query request based on the second collection path, and send the session step data query request to the service system. The service system obtains the session step data according to the second collection path, and feeds back the session step data to the tracing system. In another case, the storage location indicated by the second collection path includes a large amount of data. The session step data processing rule further includes a query rule. The query rule is used to determine a query parameter for querying session step data. The query rule is determined based on an association relationship between session service data generated in a process of processing a service session by the service system. The tracing system obtains a set of processed data, and generates a query parameter based on the query rule and the set of processed data. In an example, the query rule is a function expression. An input parameter of the function expression is processed data generated during historical processing of a service flow node. The tracing system obtains processed data from the set of processed data and inputs the data to the function expression to obtain a query parameter output by the function expression. The tracing system obtains the session step data by querying, based on the query parameter, the storage location indicated by the second collection path.

In another possible implementation, the session step data processing rule is used to convert a data format of the session step data. The session step data processing rule includes a format conversion rule. The format conversion rule indicates to perform data format conversion on the session step data. The format conversion rule includes data formats before and after conversion. The tracing system can convert a format of the session step data based on the format conversion rule.

In some cases, the plurality of service flow nodes further include a third service flow node. A data processing rule corresponding to the third service flow node includes a branch determining rule. The third service flow node is also referred to as a branch determining node. There is an execution sequence of the third service flow node and a plurality of service flow nodes.

When processing the third service flow node based on the service flow configuration information, the tracing system determines, based on a branch determining rule corresponding to the third service flow node, a next service flow node that needs to be executed.

Specific content of the branch determining rule is not limited in embodiments of this application. In an example, the branch determining rule is to determine, based on a current status of processing a service flow node by the tracing system, a next service flow node that needs to be executed. In another example, the branch determining rule includes a determining expression. The tracing system can obtain processed data generated by a processed service flow node and determine, by using the determining expression, a service flow node to be executed.

The target service flow shown in FIG. 8 is used as an example. A service flow node of user payment is a third service flow node. A branch determining rule corresponding to the service flow node of user payment is whether service session data of successful user payment is obtained. If the tracing system obtains the service session data of successful payment, the tracing system determines to execute commodity stock-out and subsequent service flow nodes based on the branch determining rule.

After determining a next service flow node that needs to be executed, the tracing system displays a target service flow including the next service flow node that needs to be executed. This facilitates the user learning of a service flow currently executed by the tracing system.

A specific implementation in which the tracing system displays the target service flow including the next service flow node that needs to be executed is not limited in embodiments of this application. In a possible implementation, the tracing system deletes a service flow branch that does not need to be executed from a target service flow, and displays only a service flow branch that needs to be executed. The target service flow shown in FIG. 8 is used as an example. FIG. 9 is a diagram of displaying a target service flow according to an embodiment of this application. A service flow branch including the order cancellation node is deleted from the target service flow and only a branch including the commodity stock-out node and subsequent service flow nodes is retained. In another possible implementation, the tracing system differently displays, in the target service flow, a service flow node that needs to be executed and a service flow node that does not need to be executed, so that the user can distinguish between these service flow nodes. The target service flow shown in FIG. 8 is used as an example. FIG. 10 is another diagram of displaying a target service flow according to an embodiment of this application. In the target service flow, a service flow branch including the order cancellation node is represented by a dotted line, and a service flow branch including the commodity stock-out node and subsequent service flow nodes is represented by a solid line.

In some possible implementations, each time the tracing system processes a service flow node, the tracing system further generates a node execution result. The node execution result is an execution result of the service flow node. In an example, the node execution result includes one or more of time for processing the service flow node, output processed data, and whether an exception is processed. Based on the node execution result, a process of processing, by the tracing system, the service flow node included in the service flow configuration information can be analyzed.

The tracing system shown in FIG. 6 is used as an example. Each time the session tracing module 603 completes a data processing rule of a service flow node, the session tracing module 603 generates a node execution result of the service flow node, and writes the node execution result into the service session data database 605.

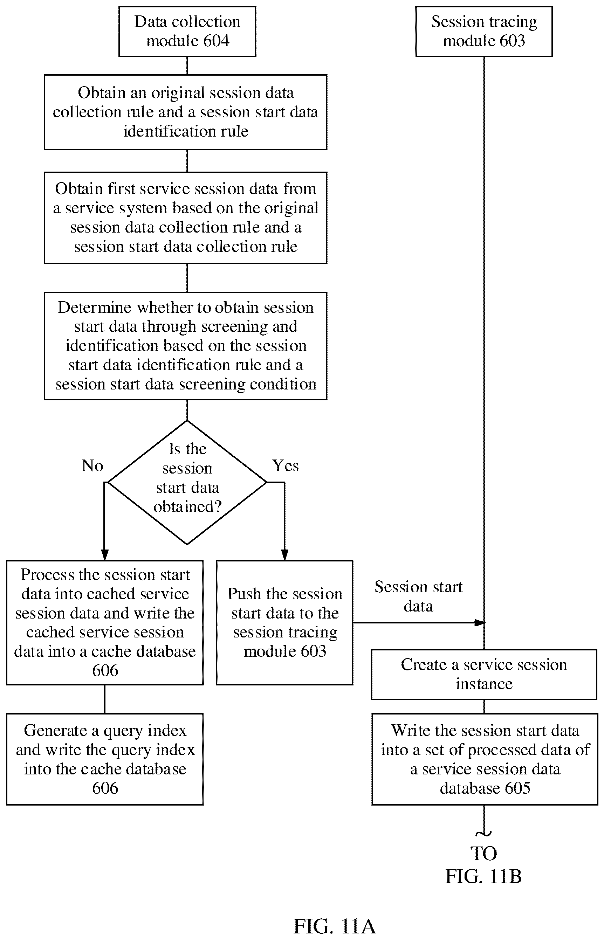

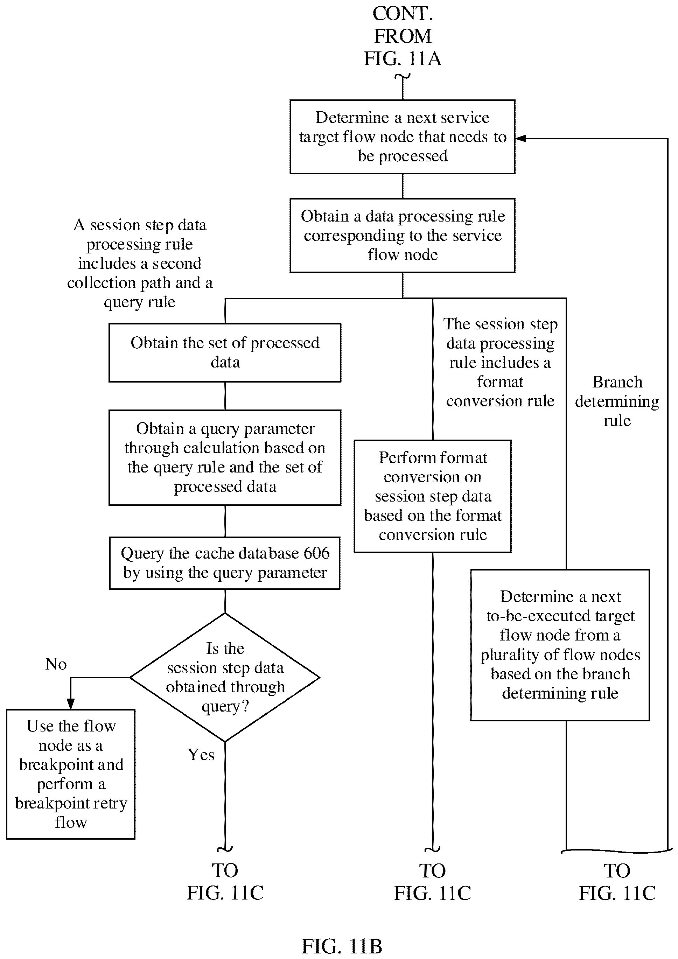

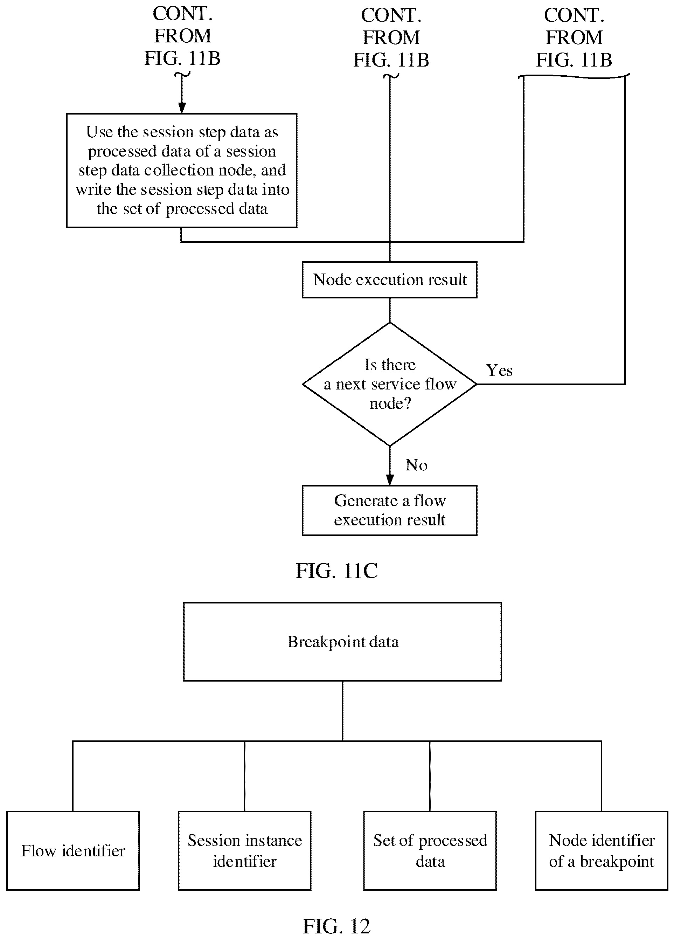

The following uses the session tracing module 603 and the data collection module 604 included in the tracing system 600 shown in FIG. 6 as an example. With reference to FIG. 11A to FIG. 11C, an embodiment of this application provides a diagram of a flow of interaction between the session tracing module and the data collection module.

The data collection module 604 obtains, from the service flow configuration information of the service flow definition database 602, an original session data collection rule and a session start data identification rule that correspond to a start node, and obtains service session data from the service system based on the original session data collection rule. If session start data is identified from the service session data based on the session start data identification rule, the session start data is pushed to the session tracing module 603. If session start data is not identified from the service session data, the data collection module 604 processes the service session data as cached service session data, writes the cached service session data into the cache database 606, generates a query index based on a query index creation rule further included in the original session data collection rule, and writes the query index into the cache database 606.

When the session start data is obtained, the session tracing module 603 receives the session start data sent by the data collection module 604, creates a service session instance, and writes the session start data into a set of processed data in the service session data database 605. The session tracing module 603 obtains an execution sequence from the service flow configuration information of the service flow definition database 602, and determines a next service flow node that needs to be processed.

The session tracing module 603 obtains a data processing rule corresponding to the service flow node.

If the data processing rule corresponding to the service flow node is a session step data processing rule, the session step data processing rule includes a second collection path and a query rule. The second collection path includes the cache database 606 and a data source A. A collection priority of the cache database 606 is higher than that of the data source A. The session tracing module 603 obtains a set of processed data. The session tracing module 603 obtains the query parameter through calculation based on the query rule and the set of processed data. The query parameter is used to query the cache database 606. If session step data is obtained through query, the session tracing module 603 uses the session step data as processed data of the service flow node, and writes the session step data into the set of processed data. The service flow node is completely processed and a node execution result is generated. If session step data is not obtained through query, the session tracing module 603 uses the service flow node as a breakpoint and performs a breakpoint retry flow. For details about how to process a breakpoint, see the following descriptions.

If the data processing rule corresponding to the service flow node is a session step data processing rule, the session step data processing rule includes a format conversion rule. The session tracing module 603 performs format conversion on the session step data based on the format conversion rule, and the output session step data is the session step data after format conversion. The session tracing module 603 writes the session step data after format conversion into the set of processed data, completes processing of the service flow node, and generates a node execution result.

If the data processing rule corresponding to the service flow node is a branch determining rule, the session tracing module 603 determines, from the plurality of flow nodes based on the branch determining rule, a next target flow node for execution, completes processing of the service flow node, and generates a node execution result.

If it is determined, based on the service flow configuration information and the execution sequence, that there is a next service flow node, the next service flow node is processed. If it is determined, based on the service flow configuration information and the execution sequence, that there is no next service flow node, current processing of the service flow configuration information ends, and a flow execution result is generated.

In some possible implementations, the tracing system needs to check processed data obtained by executing the data processing rule corresponding to the service flow node. The data processing rules further include a data check rule. The data check rule is used to determine, after the data processing rule corresponding to the service flow node is executed, whether processed data output by the service flow node is correct. The data check rule includes, for example, a rule for checking a data format of the processed data, a rule for checking a data value, and a rule for checking a data value range.

Correspondingly, an embodiment of this application provides a specific implementation of executing the data processing rule corresponding to the service flow node when the data processing rule further includes the data check rule. The implementation includes:
the tracing system performs, based on the data check rule, data check on the processed data obtained by executing the data processing rule corresponding to the service flow node, and obtains a data check result.

The tracing system checks whether the processed data output by the service flow node complies with the data check rule. If the processed data complies with the data check rule, the data check result is normal. If the processed data does not comply with the data check rule, the data check result is abnormal. The obtained data check result can be stored in a data check result database, so that the data check result can be queried from the data check result database subsequently. In some possible implementations, after an abnormal data check result is obtained, alarm information is displayed. The alarm information includes exceptional processed data and a service flow node corresponding to the exceptional processed data. A service flow, of the service system, corresponding to the exceptional processed data can be determined based on a service flow node that generates the exceptional processed data. This can implement exception check on processed data at a service flow node level, and can improve accuracy of service session data check. In some possible implementations, the data check rule relates to processed data that is of another service flow node and that has a data association relationship. The tracing system performs, based on the data check rule and the set of processed data, check on the processed data obtained by executing the data processing rule corresponding to the service flow node, and obtains the data check result.

The tracing system shown in FIG. 6 is used as an example. The tracing system 600 includes the data exception detection module 607 and the session detection result database 608. The session tracing module 603 processes a service flow node, obtains processed data of the current service flow node, and sends the processed data to the data exception detection module 607. The data exception detection module 607 obtains the processed data, obtains, from the service flow configuration information stored in the service flow definition database 602, a data check rule included in a data processing rule corresponding to the service flow node, and checks the processed data. A data check result detected by the data exception detection module 607 is stored in the session detection result database 608, to subsequently query the data check result from the session detection result database 608.

The foregoing describes a process of processing the service flow node in the execution sequence and the service flow configuration information, obtaining service session data from the service system, and processing the service session data. In some cases, in a process of executing the data processing rule corresponding to the service flow node, processing may be interrupted. For example, a speed for processing a service by the service system is slower than a speed for processing a service flow node by the tracing system based on the service flow configuration information. When the tracing system processes a specific service flow node, the service system may not generate corresponding service session data. The tracing system cannot properly obtain the service session data and thus cannot process the service flow node. In this case, processing of the service flow node needs to be interrupted and the node awaits processing by the service system. For another example, in another possible case, a failure occurs in processing of the service flow node by the tracing system, and the service flow node cannot be processed properly, resulting in interrupted processing of the service flow node. For another example, in another possible case, a problem exists in service flow nodes or an execution sequence in the service flow configuration information. The tracing system cannot properly process the service flow node based on the service flow configuration information, and consequently interrupt processing of the service flow node.

Based on the foregoing case, the tracing system uses a service flow node with interrupted processing as a breakpoint in a process of processing the service flow node based on the service flow configuration information. The service session data tracing method provided in this embodiment of this application further includes the following steps:
B1: If a breakpoint condition is met, a currently processed service flow node is marked as a breakpoint.

A breakpoint is a service flow node with interrupted processing. The breakpoint condition can be determined based on a condition for interrupted processing and a type of the service flow node. In an example, the service flow node with interrupted processing needs to be determined as a breakpoint. The breakpoint condition is that interrupted processing is required. For example, a currently processed service flow node is a first service flow node, that is, a flow node corresponding to a data processing rule including an original session data collection rule. The breakpoint condition is that no service session data is obtained in a preset time period. In another example, a service flow node that is switched to be manually operated by the user needs to be determined as a breakpoint. The breakpoint condition is that the service flow node starts to be processed. In still another example, a service flow node with exceptional processed data needs to be determined as a breakpoint. The breakpoint condition is that a result of checking processed data is data exception.

When the breakpoint condition is met, the executed service flow node is marked as a breakpoint.

After the currently processed service flow node is determined as a breakpoint, breakpoint data is generated. FIG. 12 is a diagram of a data structure of breakpoint data according to an embodiment of this application. The breakpoint data includes a flow identifier, a session instance identifier, a set of processed data, and a node identifier of a breakpoint. A service flow node with interrupted processing can be determined based on the breakpoint data.

The tracing system shown in FIG. 6 is used as an example. The tracing system includes the breakpoint data storage database 609. The breakpoint data storage database 609 is connected to the session tracing module 603. The session tracing module 603 determines a breakpoint based on the breakpoint condition, generates breakpoint data, and writes the breakpoint data into the breakpoint data storage database 609.

B2: Repeatedly execute, in response to meeting a resumption condition, a data processing rule corresponding to the breakpoint until the data processing rule corresponding to the breakpoint is successfully executed or total duration for processing the breakpoint reaches a threshold.

After the breakpoint is determined, the data processing rule corresponding to the breakpoint is executed again when the resumption condition is met. If the data processing rule corresponding to the breakpoint is successfully executed, step B3 is performed. If the data processing rule corresponding to the breakpoint fails to be executed, the data processing rule corresponding to the breakpoint is executed when the resumption condition is met. In this way, the operation is repeated until the total duration for processing the breakpoint reaches the threshold or the data processing rule corresponding to the breakpoint is successfully executed. The threshold can be configured based on processing duration of the service flow node.

The resumption condition is a condition for executing the breakpoint again. For example, the resumption condition is that time after the breakpoint is executed reaches preset interval duration. For another example, the resumption condition is that a breakpoint execution request input by the user is obtained. The breakpoint execution request indicates to re-execute the breakpoint. In an example, the breakpoint execution request includes a node identifier of the breakpoint. In some implementations, the breakpoint execution request input by the user further includes input data. After obtaining the breakpoint execution request, the tracing system uses the input data included in the breakpoint execution request as input data of the breakpoint, and re-executes the breakpoint, so that the user can correct the input data of the breakpoint. For another example, the data processing rule corresponding to the breakpoint is an original session data collection rule. The resumption condition is that original session data indicated by the original session data collection rule is obtained.

If the breakpoint cannot be successfully processed when the threshold is reached, the breakpoint fails to be processed. In a possible implementation, when the breakpoint fails to be processed, processing on the service flow configuration information is stopped, and a flow execution result is generated. The flow execution result includes a current status of processing the service flow configuration information and breakpoint information. The current status of processing the service flow configuration information is abnormal. In another possible implementation, in a case in which the breakpoint fails to be processed and the breakpoint does not affect processing of service flow nodes of other branches based on an execution sequence included in the service flow configuration information, the service flow nodes of the other branches continue to be processed until processing of other branches is complete or a breakpoint occurs in another branch and the breakpoint fails to be processed. Then, a flow execution result is generated. The flow execution result includes a current status of processing the service flow configuration information and breakpoint information.

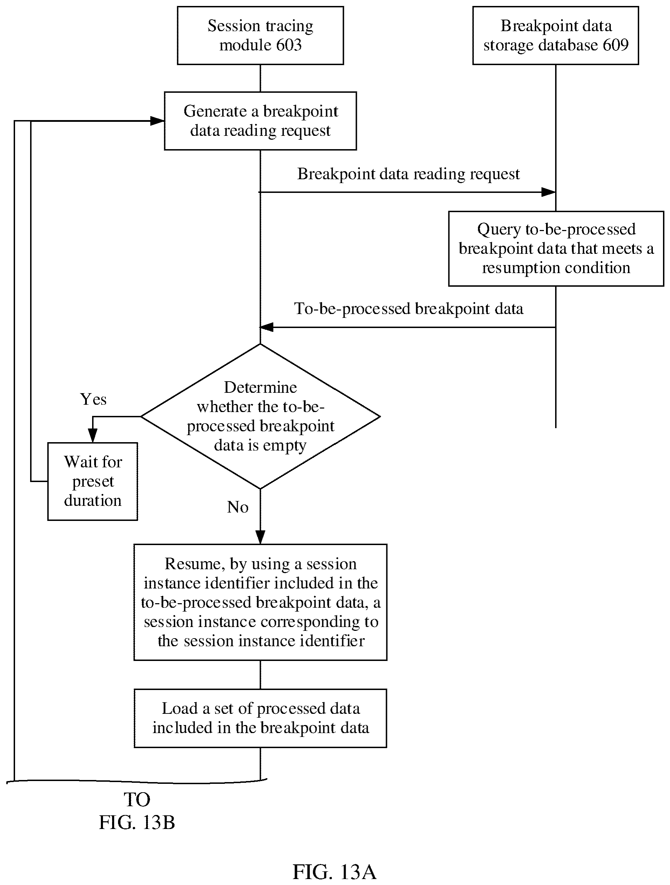

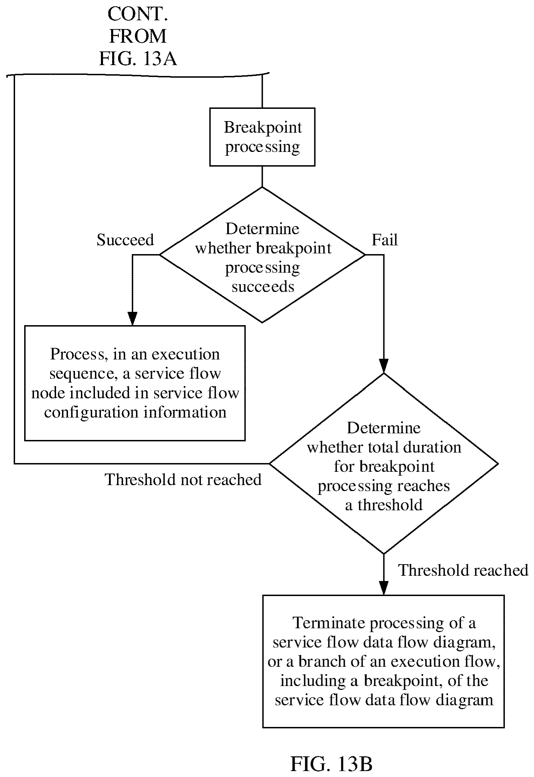

In an example, with reference to the tracing system shown in FIG. 6, FIG. 13A and FIG. 13B are a schematic flowchart of breakpoint processing according to an embodiment of this application.

The session tracing module 603 generates a breakpoint data reading request. The session tracing module 603 sends the breakpoint data reading request to the breakpoint data storage database 609. After obtaining the breakpoint data reading request, the breakpoint data storage database 609 queries to-be-processed breakpoint data that meets the resumption condition. The breakpoint data storage database 609 feeds back the to-be-processed breakpoint data that meets the resumption condition to the session tracing module 603. The session tracing module 603 obtains to-be-processed breakpoint data. If the to-be-processed breakpoint data is empty, it indicates that there is no to-be-processed breakpoint data currently. The session tracing module 603 waits for preset duration and then sends a breakpoint data reading request to the breakpoint data storage database 609. If the to-be-processed breakpoint data is not empty, it indicates that there is to-be-processed breakpoint data currently. The session tracing module 603 resumes, by using a session instance identifier included in the to-be-processed breakpoint data, a session instance corresponding to the session instance identifier, and loads a set of processed data included in the breakpoint data. The session tracing module 603 processes a breakpoint. If the breakpoint processing succeeds, a service flow node included in the service flow configuration information continues to be processed in the execution sequence. If the breakpoint processing fails, the session tracing module 603 determines whether total duration for processing the breakpoint reaches the threshold. If the total duration for processing the breakpoint reaches the threshold, the session tracing module 603 stops processing the service flow configuration information, or a branch that includes the breakpoint and that is determined in the execution sequence in the service flow configuration information. If the total duration for processing the breakpoint does not reach the threshold, the session tracing module 603 generates a breakpoint data reading request, and continues to retry the breakpoint.

B3: If the data processing rule corresponding to the breakpoint is successfully executed, a next service flow node continues to be processed in the execution sequence.

It should be noted that the execution sequence included in the service flow configuration information may include a plurality of branches for parallel execution. When a breakpoint occurs in a service flow node included in a branch, processing of service flow nodes included in other branches is not affected.

In a session tracing scenario with a high real-time requirement, an execution progress for the tracing system may be ahead of an actual session progress for the service system. Integrity of service session data traced by using the tracing system can be ensured by storing a breakpoints and retrying breakpoint processing. In addition, a timeout mechanism for processing a breakpoint can be used to identify exceptional termination.

When a service flow node is completely processed based on the service flow configuration information and the execution sequence, or when there is breakpoint failing to be processed and processing of the service flow configuration information is terminated, the tracing system determines that current processing of the service flow configuration information ends.

The tracing system further generates a flow execution result. The flow execution result is a result obtained by executing the service flow configuration information. In an example, the flow execution result includes a session execution status, session interruption information, and session execution duration. A status of processing the service flow configuration information by the tracing system can be determined based on the flow execution result.

The tracing system shown in Figure 6 is used as an example. The session tracing module 603 determines that the current processing of the service flow configuration information ends, generates a flow execution result, and writes the result into the service session data database 605. The tracing system can further display a status of executing a data processing rule corresponding to at least one service flow node and a running status of the service system. The tracing system generates traced data. The traced data includes one or more of a node execution result, a flow execution result, and a data check result. After generating traced data, the tracing system displays the traced data, so that the user can learn of a running status of the service system and the tracing system.

A manner in which the tracing system is triggered to generate traced data is not limited in embodiments of this application. In a possible implementation, after the tracing system completes tracing of the service session once based on the service flow configuration information, the tracing system is automatically triggered to generate traced data. In another possible implementation, the user can query required traced data. The user can trigger a query request. The query request includes data information of the traced data. Data information of the traced data is, for example, a node identifier of a flow node, or an identifier of service flow configuration information processed this time. The tracing system obtains the query request, and obtains the traced data by querying the data information included in the query request.

The tracing system shown in FIG. 6 is used as an example. The tracing system 600 includes the flow dashboard module 610. The flow dashboard module can obtain, automatically or based on a query request sent by the user, a flow execution result and a node execution result from the service session data database 605, and obtain a data check result from the session detection result database 608. The obtained flow execution result, node execution result, and data check result are displayed as traced data.

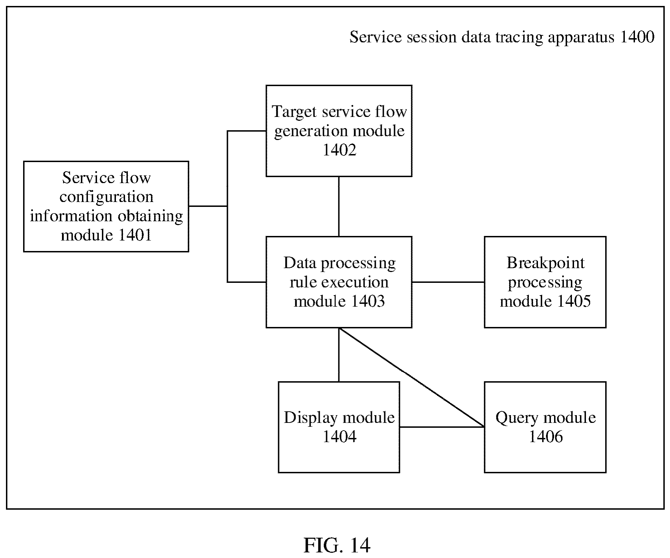

Based on the service session data tracing method provided in this embodiment of this application, with reference to FIG. 14, an embodiment of this application further provides a diagram of a structure of a service session data tracing apparatus 1400. The service session data tracing apparatus 1400 can implement functions of a tracing system. The service session data tracing apparatus 1400 is used in the tracing system. The tracing system is used to trace a service system. The service session data tracing apparatus 1400 includes a service flow information configuration interface.

FIG. 14 is a diagram of the structure of the service session data tracing apparatus according to this embodiment of this application. The service session data tracing apparatus 1400 includes a service flow configuration information obtaining module 1401, a target service flow generation module 1402, and a data processing rule execution module 1403. For functions of the modules in the service session data tracing apparatus 1400, refer to related descriptions in the embodiment shown in FIG. 5. The service flow configuration information obtaining module 1401 is configured to implement S501 in the embodiment shown in FIG. 5. The target service flow generation module 1402 is configured to implement S502 in the embodiment shown in FIG. 5. The data processing rule execution module 1403 is configured to implement S503 in the embodiment shown in FIG. 5.

Specifically, the service flow configuration information obtaining module 1401 is configured to obtain, through the service flow information configuration interface, service flow configuration information input by a user, where the service flow configuration information includes a plurality of service flow nodes, an execution sequence of the plurality of service flow nodes, and a data processing rule corresponding to at least one service flow node.

The target service flow generation module 1402 is configured to generate a target service flow based on the service flow configuration information, where the target service flow corresponds to a service session flow in the service system.

The data processing rule execution module 1403 is configured to execute, based on the service flow configuration information, the data processing rule corresponding to the at least one service flow node, where a data processing rule corresponding to a first service flow node in the plurality of service flow nodes includes an original session data collection rule, and a data source for the original session data collection rule is service session data in the service system.

In a possible implementation, the apparatus further includes:
a display module 1404, configured to display traced data, where the traced data includes one or more of a node execution result, a flow execution result, and a data check result, the node execution result is an execution result of the service flow node, the flow execution result is an execution result of a service flow corresponding to the service flow configuration information, and the data check result is a result obtained by checking processed data obtained by executing the data processing rule corresponding to the service flow node.

In a possible implementation, the service flow information configuration interface provides a plurality of service flow node diagram elements selectable by the user, and the service flow node diagram elements correspond to service flow nodes; and that the service flow configuration information obtaining module is configured to obtain, through the service flow information configuration interface, the service flow configuration information input by the user includes:
the service flow configuration information obtaining module is specifically configured to: receive the plurality of service flow node diagram elements and an execution sequence that are configured by the user through the service flow information configuration interface; and generate a service flowchart, where the service flow nodes corresponding to the service flow node diagram elements in the service flowchart, and the execution sequence corresponds to the service session flow in the service system.

In a possible implementation, the original session data collection rule includes a first collection path, and the first collection path indicates a target data source for an original session data collection operation; and that the data processing rule execution module is configured to execute the data processing rule corresponding to the service flow node includes:
the data processing rule execution module is configured to: send a service session data collection request to the service system; and receive service session data sent by the service system, where the service session data is stored in the target data source of the service system, and the target data source includes one or any combination of a DB SQL database structured query language data source, a DB binlog database binary log data source, a RESTful RESTful interface data source, a NoSQL not only SQL database data source, a service log source, a service DB database data source, and a file data source. In a possible implementation, the original session data collection rule further includes a query index creation rule; and that the data processing rule execution module is configured to execute the data processing rule corresponding to the service flow node includes:
the data processing rule execution module is specifically configured to: convert the service session data into cached service session data, where the cached service session data matches a cache database of the tracing system in format; create a query index of the cached service session data based on the cached service session data and a query index creation rule of the target data source; and write the cached service session data and the query index into the cache database.

In a possible implementation, the data processing rule further includes a session start data identification rule corresponding to the first service flow node, the first service flow node is a start node of the service session flow, and the service session data is start session data of the service session flow; and that the data processing rule execution module is configured to execute, based on the service flow configuration information, the data processing rule corresponding to the service flow node includes:
the data processing rule execution module is specifically configured to: create a first service session instance, where a start node of the first service session instance is the first service flow node; and execute a data processing rule corresponding to a target flow node, where the target flow node is a service flow node determined to be executed from the first service flow node based on the service flow configuration information.

In a possible implementation, the data processing rule further includes a session step data processing rule corresponding to a second service flow node in the plurality of service flow nodes, the session step data processing rule includes a second collection path, and the second collection path includes the first collection path; and that the data processing rule execution module is configured to execute the data processing rule corresponding to the service flow node includes:
the data processing rule execution module is specifically configured to: obtain a set of processed data, where the set of processed data includes one or two of the service session data and the processed data obtained by executing the data processing rule corresponding to the service flow node; generate a query parameter based on a query rule and the set of processed data; and obtain session step data by querying, based on the query parameter, a storage location indicated by the second collection path. In a possible implementation, the data processing rule further includes a session step data processing rule corresponding to a second service flow node, the session step data processing rule includes a second collection path, and the second collection path includes one or two of the first collection path and the cache database; and that the data processing rule execution module is configured to execute the data processing rule corresponding to the service flow node includes:
the data processing rule execution module is specifically configured to: obtain a set of processed data, where the set of processed data includes one or more of the service session data, the cached service session data, and the processed data obtained by executing the data processing rule corresponding to the service flow node; generate a query parameter based on a query rule and the set of processed data; and obtain session step data by querying, based on the query parameter, a storage location indicated by the second collection path.

In a possible implementation, the data processing rule further includes a data check rule; and that the data processing rule execution module is configured to execute, based on the service flow configuration information, the data processing rule corresponding to the service flow node includes:
the data processing rule execution module is specifically configured to: perform, based on the data check rule, data check on the processed data obtained by executing the data processing rule corresponding to the service flow node; and obtain a data check result.

In a possible implementation, the data processing rule further includes a branch determining rule corresponding to a third service flow node, and there is an execution sequence of the third service flow node and a plurality of service flow nodes; and that the data processing rule execution module is configured to execute, based on the service flow configuration information, the data processing rule corresponding to the service flow node includes:
the data processing rule execution module is specifically configured to: determine, from the plurality of service flow nodes based on the branch determining rule corresponding to the third service flow node, a next to-be-executed service flow node; and display the target service flow including the service flow node.

In a possible implementation, the apparatus further includes:
a breakpoint processing module 1405, configured to: if a breakpoint condition is met, mark a currently processed service flow node as a breakpoint; repeatedly execute, in response to meeting a resumption condition, a data processing rule corresponding to the breakpoint until the data processing rule corresponding to the breakpoint is successfully executed or total duration for processing the breakpoint reaches a threshold; and if the data processing rule corresponding to the breakpoint is successfully executed, continue to process a next service flow node in the execution sequence.

In a possible implementation, the apparatus further includes:
a query module 1406, configured to: before displaying the traced data, obtain a query request, where the query request includes data information of the traced data, and the data information includes one or more of session information, node information, and session step data information; and obtain the traced data through querying based on the data information.

In an actual application, the service flow configuration information obtaining module 1401, the target service flow generation module 1402, the data processing rule execution module 1403, the display module 1404, the breakpoint processing module 1405, and the query module 1406 may be implemented by software, or may be implemented by hardware.

For example, the following describe an implementation of the service flow configuration information obtaining module 1401 by using the service flow configuration information obtaining module 1401 as an example. Similarly, for implementations of the target service flow generation module 1402, the data processing rule execution module 1403, the display module 1404, the breakpoint processing module 1405, and the query module 1406, refer to the implementation of the service flow configuration information obtaining module 1401.

As an example of a software functional unit, the service flow configuration information obtaining module 1401 may include code running on a computing instance. The computing instance may include at least one of a physical host (a computing device), a virtual machine, and a container. Further, there may be one or more computing instances. For example, the service flow configuration information obtaining module 1401 may include code running on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

The service flow configuration information obtaining module 1401 is used as an example of a hardware functional unit, and the service flow configuration information obtaining module 1401 may include at least one computing device such as a server. Alternatively, the service flow configuration information obtaining module 1401 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the service flow configuration information obtaining module 1401 may be distributed in a same region, or may be distributed in different regions. The plurality of computing devices included in the service flow configuration information obtaining module 1401 may be distributed in a same AZ, or may be distributed in different AZs. Similarly, the plurality of computing devices included in the service flow configuration information obtaining module 1401 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in this embodiment of this application, division into the service flow configuration information obtaining module 1401, the target service flow generation module 1402, the data processing rule execution module 1403, the display module 1404, the breakpoint processing module 1405, and the query module 1406, and function descriptions are merely used as an example.

In other embodiments, the service flow configuration information obtaining module 1401 may be configured to execute any step in the service session data tracing method, the target service flow generation module 1402 may be configured to execute any step in the service session data tracing method, the data processing rule execution module 1403 may be configured to execute any step in the service session data tracing method, the display module 1404 may be configured to execute any step in the service session data tracing method, and the breakpoint processing module 1405 may be configured to execute any step in the service session data tracing method, the query module 1406 may be configured to execute any step in the service session data tracing method. The steps implemented by the service flow configuration information obtaining module 1401, the target service flow generation module 1402, the data processing rule execution module 1403, the display module 1404, the breakpoint processing module 1405, and the query module 1406 may be specified as required. The service flow configuration information obtaining module 1401, the target service flow generation module 1402, the data processing rule execution module 1403, the display module 1404, the breakpoint processing module 1405, and the query module 1406 respectively implement different steps in the service session data tracing method, to implement all functions of the service session data tracing apparatus.

In the embodiment shown in FIG. 14, the service flow configuration information obtaining module 1401, the target service flow generation module 1402, the data processing rule execution module 1403, the display module 1404, the breakpoint processing module 1405, and the query module 1406 may be software configured on a computing device or a computing device cluster. In addition, the computing device or the computing device cluster may implement functions of the foregoing apparatus by running the software on the computing device or the computing device cluster. The following describes in detail apparatuses in a code review process from a perspective of hardware device implementation.

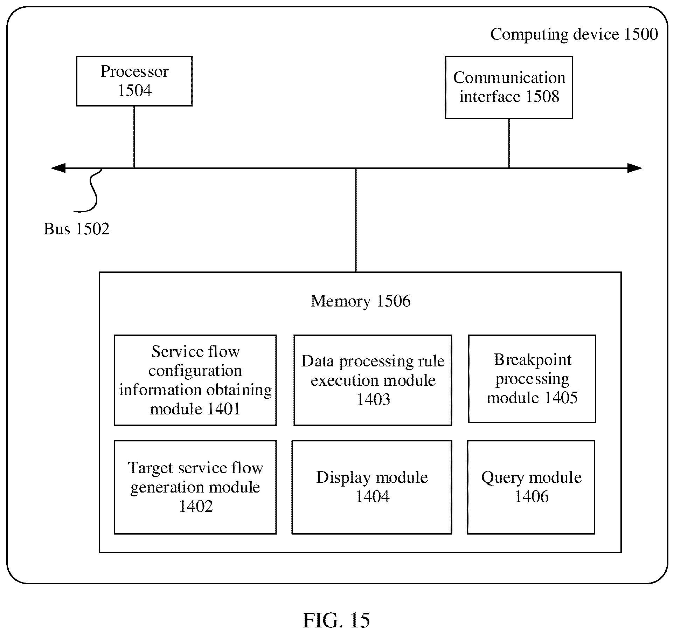

This application further provides a computing device 1500. As shown in FIG. 15, the computing device 1500 includes a bus 1502, a processor 1504, a memory 1506, and a communication interface 1508. The processor 1504, the memory 1506, and the communication interface 1508 communicate with each other through the bus 1502. The computing device 1500 may be a server or a terminal device. It should be understood that a quantity of processors and a quantity of memories in the computing device 1500 are not limited in this application.

The bus 1502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. To facilitate illustration, only one line is used in FIG. 15 to represent the bus, but it does not indicate that there is only one bus or only one type of bus. The bus 1502 may include a path for transmitting information between components (for example, the memory 1506, the processor 1504, and the communication interface 1508) of the computing device 1500.

The processor 1504 may include any one or more of processors such as a central processing unit (central processing unit, CPU), a graphics processing unit (graphics processing unit, GPU), a micro processor (micro processor, MP), or a digital signal processor (digital signal processor, DSP).

The memory 1506 may include a volatile memory (volatile memory), for example, a random access memory (random access memory, RAM). The processor 1504 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1506 stores executable program code, and the processor 1504 executes the executable program code to implement functions of the service flow configuration information obtaining module 1401, the target service flow generation module 1402, the data processing rule execution module 1403, the display module 1404, the breakpoint processing module 1405, and the query module 1406, so as to implement a service session data tracing method. That is, the memory 1506 stores instructions for executing the service session data tracing method.

The communication interface 1508 implements communication between the computing device 1500 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

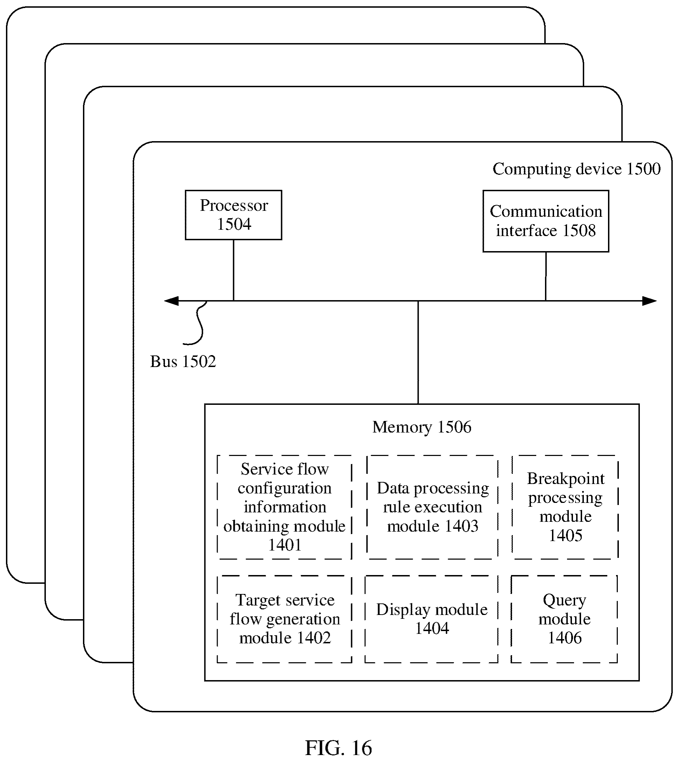

As shown in FIG. 16, the computing device cluster includes at least one computing device 1500. Memories 1506 in one or more computing devices 1500 in the computing device cluster may store same instructions for performing a service session data tracing method.

It should be noted that memories 1506 in different computing devices 1500 in the computing device cluster may store different instructions, and are respectively configured to perform a part of functions of a service session data tracing apparatus. To be specific, the instructions stored in the memories 1506 in the different computing devices 1500 may implement functions of one or more of a service flow configuration information obtaining module 1401, a target service flow generation module 1402, a data processing rule execution module 1403, a display module 1404, a breakpoint processing module 1405, and a query module 1406.

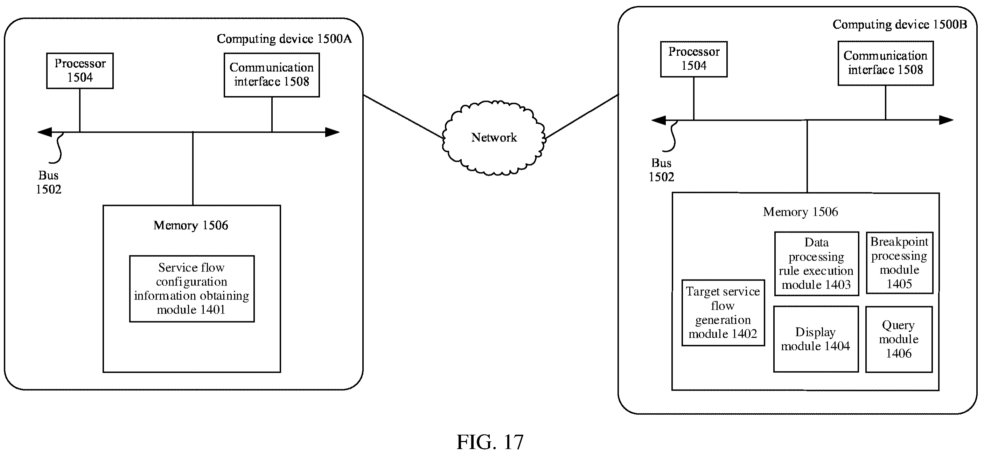

In some possible implementations, the one or more computing devices in the computing device cluster may be connected through a network. The network may be a wide area network, a local area network, or the like. FIG. 17 shows a possible implementation. As shown in FIG. 17, a computing device 1500A is connected to a computing device 1500B through a network. Specifically, each computing device is connected to the network through a communication interface in the computing device. In this possible implementation, a memory 1506 in the computing device 1500A stores an instruction for performing a function of the service flow configuration information obtaining module 1401. In addition, a memory 1506 in the computing device 1500B stores instructions for executing functions of the target service flow generation module 1402, the data processing rule execution module 1403, the display module 1404, the breakpoint processing module 1405, and the query module 1406.

A manner of connection between computing device clusters shown in FIG. 17 may be as follows: Based on consideration that the service flow configuration information obtaining module 1401 in the service session data tracing method provided in this application needs to interact with a user a lot, it is considered that functions implemented by the target service flow generation module 1402, the data processing rule execution module 1403, the display module 1404, the breakpoint processing module 1405, and the query module 1406 are performed by the computing device 1500B.

It should be understood that a function of the computing device 1500A shown in FIG. 17 may alternatively be completed by the plurality of computing devices 1500. Similarly, a function of the computing device 1500B may alternatively be completed by the plurality of computing devices 1500.

An embodiment of this application further provides a computer program product including instructions. The computer program product may be software or a program product that includes the instructions and that can be run on a computing device or stored in any usable medium. When the computer program product runs on at least one computing device, the at least one computing device is enabled to perform a service session data tracing method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform a service session data tracing method.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that the technical solutions described in the foregoing embodiments may still be modified or some technical features thereof are equivalently replaced, without departing from the protection scope of the technical solutions of embodiments of the prevention.

## Claims

1. A service session data tracing method, wherein the method is applied to a tracing system, the tracing system is used to trace a service system, and the tracing system comprises a service flow information configuration interface; and the method comprises:
obtaining, through the service flow information configuration interface, service flow configuration information input by a user, wherein the service flow configuration information comprises a plurality of service flow nodes, an execution sequence of the plurality of service flow nodes, and a data processing rule corresponding to at least one service flow node;
generating a target service flow based on the service flow configuration information, wherein the target service flow corresponds to a service session flow in the service system; and
executing, based on the service flow configuration information, the data processing rule corresponding to the at least one service flow node, wherein a data processing rule corresponding to a first service flow node in the plurality of service flow nodes comprises an original session data collection rule, and a data source for the original session data collection rule is service session data in the service system.

2. The method according to claim 1, wherein the method further comprises:
displaying traced data, wherein the traced data comprises one or more of a node execution result, a flow execution result, and a data check result, the node execution result is an execution result of the service flow node, the flow execution result is an execution result of a service flow corresponding to the service flow configuration information, and the data check result is a result obtained by checking processed data obtained by executing the data processing rule corresponding to the service flow node.

3. The method according to claim 1 or 2, wherein the service flow information configuration interface provides a plurality of service flow node diagram elements selectable by the user, and the service flow node diagram elements correspond to service flow nodes; and obtaining, through the service flow information configuration interface, the service flow configuration information input by the user comprises:
receiving the plurality of service flow node diagram elements and an execution sequence that are configured by the user through the service flow information configuration interface; and
generating a service flowchart, wherein the service flow nodes corresponding to the service flow node diagram elements in the service flowchart, and the execution sequence corresponds to the service session flow in the service system.

4. The method according to any one of claims 1 to 3, wherein the original session data collection rule comprises a first collection path, and the first collection path indicates a target data source for an original session data collection operation; and executing the data processing rule corresponding to the service flow node comprises:
sending a service session data collection request to the service system; and
receiving service session data sent by the service system, wherein the service session data is stored in the target data source of the service system, and the target data source comprises one or any combination of a database structured query language DB SQL data source, a DB binlog database binary log data source, a RESTful interface data source, a NoSQL not only SQL database data source, a service log source, a service DB database data source, and a file data source.

5. The method according to claim 4, wherein the original session data collection rule further comprises a query index creation rule; and executing the data processing rule corresponding to the service flow node comprises:
converting the service session data into cached service session data, wherein the cached service session data matches a cache database of the tracing system in format;
creating a query index of the cached service session data based on the cached service session data and a query index creation rule of the target data source; and
writing the cached service session data and the query index into the cache database.

6. The method according to any one of claims 1 to 5, wherein the data processing rule further comprises a session start data identification rule corresponding to the first service flow node, the first service flow node is a start node of the service session flow, and the service session data is start session data of the service session flow; and executing, based on the service flow configuration information, the data processing rule corresponding to the service flow node comprises:
creating a first service session instance, wherein a start node of the first service session instance is the first service flow node; and
executing a data processing rule corresponding to a target flow node, wherein the target flow node is a service flow node determined to be executed from the first service flow node based on the service flow configuration information.

7. The method according to any one of claims 4 to 6, wherein the data processing rule further comprises a session step data processing rule corresponding to a second service flow node in the plurality of service flow nodes, the session step data processing rule comprises a second collection path, and the second collection path comprises the first collection path; and executing the data processing rule corresponding to the service flow node comprises:
obtaining a set of processed data, wherein the set of processed data comprises one or two of the service session data and the processed data obtained by executing the data processing rule corresponding to the service flow node;
generating a query parameter based on a query rule and the set of processed data; and
obtaining session step data by querying, based on the query parameter, a storage location indicated by the second collection path.

8. The method according to claim 5 or 6, wherein the data processing rule further comprises a session step data processing rule corresponding to a second service flow node, the session step data processing rule comprises a second collection path, and the second collection path comprises one or two of the first collection path and the cache database; and executing the data processing rule corresponding to the service flow node comprises:
obtaining a set of processed data, wherein the set of processed data comprises one or more of the service session data, the cached service session data, and the processed data obtained by executing the data processing rule corresponding to the service flow node;
generating a query parameter based on a query rule and the set of processed data; and
obtaining session step data by querying, based on the query parameter, a storage location indicated by the second collection path.

9. The method according to any one of claims 1 to 8, wherein the data processing rule further comprises a data check rule; and executing, based on the service flow configuration information, the data processing rule corresponding to the service flow node comprises:
performing, based on the data check rule, data check on the processed data obtained by executing the data processing rule corresponding to the service flow node; and
obtaining a data check result.

10. The method according to any one of claims 1 to 9, wherein the data processing rule further comprises a branch determining rule corresponding to a third service flow node, and there is an execution sequence of the third service flow node and a plurality of service flow nodes; and executing, based on the service flow configuration information, the data processing rule corresponding to the service flow node comprises:
determining, from the plurality of service flow nodes based on the branch determining rule corresponding to the third service flow node, a next to-be-executed service flow node; and
displaying the target service flow comprising the service flow node.

11. The method according to any one of claims 1 to 10, wherein the method further comprises:
if a breakpoint condition is met, marking a currently processed service flow node as a breakpoint;
repeatedly executing, in response to meeting a resumption condition, a data processing rule corresponding to the breakpoint until the data processing rule corresponding to the breakpoint is successfully executed or total duration for processing the breakpoint reaches a threshold; and
if the data processing rule corresponding to the breakpoint is successfully executed, continuing to process a next service flow node in the execution sequence.

12. The method according to claim 2, wherein before displaying the traced data, the method comprises:
obtaining a query request, wherein the query request comprises data information of the traced data, and the data information comprises one or more of session information, node information, and session step data information; and
obtaining the traced data through querying based on the data information.

13. A service session data tracing apparatus, wherein the service session data tracing apparatus is used in a tracing system, the tracing system is used to trace a service system, the service session data tracing apparatus comprises a service flow information configuration interface, and the service session data tracing apparatus comprises:
a service flow configuration information obtaining module, configured to obtain, through the service flow information configuration interface, service flow configuration information input by a user, wherein the service flow configuration information comprises a plurality of service flow nodes, an execution sequence of the plurality of service flow nodes, and a data processing rule corresponding to the at least one service flow node;
a target service flow generation module, configured to generate a target service flow based on the service flow configuration information, wherein the target service flow corresponds to a service session flow in the service system; and
a data processing rule execution module, configured to execute, based on the service flow configuration information, the data processing rule corresponding to the at least one service flow node, wherein a data processing rule corresponding to a first service flow node in the plurality of service flow nodes comprises an original session data collection rule, and a data source for the original session data collection rule is the service session data in the service system.

14. The apparatus according to claim 13, wherein the apparatus further comprises:
a display module, configured to display traced data, wherein the traced data comprises one or more of a node execution result, a flow execution result, and a data check result, the node execution result is an execution result of the service flow node, the flow execution result is an execution result of a service flow corresponding to the service flow configuration information, and the data check result is a result obtained by checking processed data obtained by executing the data processing rule corresponding to the service flow node.

15. The apparatus according to claim 13 or 14, wherein the service flow information configuration interface provides a plurality of service flow node diagram elements selectable by the user, and the service flow node diagram elements correspond to service flow nodes; and that the service flow configuration information obtaining module is configured to obtain, through the service flow information configuration interface, the service flow configuration information input by the user comprises:
the service flow configuration information obtaining module is specifically configured to: receive the plurality of service flow node diagram elements and an execution sequence that are configured by the user through the service flow information configuration interface; and generate a service flowchart, wherein the service flow nodes corresponding to the service flow node diagram elements in the service flowchart, and the execution sequence corresponds to the service session flow in the service system.

16. The apparatus according to any one of claims 13 to 15, wherein the original session data collection rule comprises a first collection path, and the first collection path indicates a target data source for an original session data collection operation; and that the data processing rule execution module is configured to execute the data processing rule corresponding to the service flow node comprises:
the data processing rule execution module is configured to: send a service session data collection request to the service system; and receive service session data sent by the service system, wherein the service session data is stored in the target data source of the service system, and the target data source comprises one or any combination of a DB SQL database structured query language data source, a DB binlog database binary log data source, a RESTful RESTful-based interface data source, a NoSQL not only SQL database data source, a service log source, a service DB database data source, and a file data source.

17. The apparatus according to claim 16, wherein the original session data collection rule further comprises a query index creation rule; and that the data processing rule execution module is configured to execute the data processing rule corresponding to the service flow node comprises:
the data processing rule execution module is specifically configured to: convert the service session data into cached service session data, wherein the cached service session data matches a cache database of the tracing system in format; create a query index of the cached service session data based on the cached service session data and a query index creation rule of the target data source; and write the cached service session data and the query index into the cache database.

18. The apparatus according to any one of claims 13 to 17, wherein the data processing rule further comprises a session start data identification rule corresponding to the first service flow node, the first service flow node is a start node of the service session flow, and the service session data is start session data of the service session flow; and that the data processing rule execution module is configured to execute, based on the service flow configuration information, the data processing rule corresponding to the service flow node comprises:
the data processing rule execution module is specifically configured to: create a first service session instance, wherein a start node of the first service session instance is the first service flow node; and execute a data processing rule corresponding to a target flow node, wherein the target flow node is a service flow node determined to be executed from the first service flow node based on the service flow configuration information.

19. The apparatus according to any one of claims 16 to 18, wherein the data processing rule further comprises a session step data processing rule corresponding to a second service flow node in the plurality of service flow nodes, the session step data processing rule comprises a second collection path, and the second collection path comprises the first collection path; and that the data processing rule execution module is configured to execute the data processing rule corresponding to the service flow node comprises:
the data processing rule execution module is specifically configured to: obtain a set of processed data, wherein the set of processed data comprises one or two of the service session data and the processed data obtained by executing the data processing rule corresponding to the service flow node; generate a query parameter based on a query rule and the set of processed data; and obtain session step data by querying, based on the query parameter, a storage location indicated by the second collection path.

20. The apparatus according to claim 17 or 18, wherein the data processing rule further comprises a session step data processing rule corresponding to the second service flow node, the session step data processing rule comprises a second collection path, and the second collection path comprises one or two of the first collection path and the cache database; and that the data processing rule execution module is configured to execute the data processing rule corresponding to the service flow node comprises:
the data processing rule execution module is specifically configured to: obtain a set of processed data, wherein the set of processed data comprises one or more of the service session data, the cached service session data, and the processed data obtained by executing the data processing rule corresponding to the service flow node; generate a query parameter based on the query rule and the set of processed data; and obtain session step data by querying, based on the query parameter, a storage location indicated by the second collection path.

21. The apparatus according to any one of claims 13 to 20, wherein the data processing rule further comprises a data check rule; and that the data processing rule execution module is configured to execute, based on the service flow configuration information, the data processing rule corresponding to the service flow node comprises:
the data processing rule execution module is specifically configured to: perform, based on the data check rule, data check on the processed data obtained by executing the data processing rule corresponding to the service flow node; and obtain a data check result.

22. The apparatus according to any one of claims 13 to 21, wherein the data processing rule further comprises a branch determining rule corresponding to a third service flow node, and there is an execution sequence of the third service flow node and a plurality of service flow nodes; and that the data processing rule execution module is configured to execute, based on the service flow configuration information, the data processing rule corresponding to the service flow node comprises:
the data processing rule execution module is specifically configured to: determine, from the plurality of service flow nodes based on the branch determining rule corresponding to the third service flow node, a next to-be-executed service flow node; and display the target service flow comprising the service flow node.

23. The apparatus according to any one of claims 13 to 22, wherein the apparatus further comprises:
a breakpoint processing module, configured to: if a breakpoint condition is met, mark a currently processed service flow node as a breakpoint; repeatedly execute, in response to meeting a resumption condition, a data processing rule corresponding to the breakpoint until the data processing rule corresponding to the breakpoint is successfully executed or total duration for processing the breakpoint reaches a threshold; and if the data processing rule corresponding to the breakpoint is successfully executed, continue to process a next service flow node in the execution sequence.

24. The apparatus according to claim 14, wherein the apparatus further comprises:
a query module, configured to: before displaying the traced data, obtain a query request, wherein the query request comprises data information of the traced data, and the data information comprises one or more of session information, node information, and session step data information; and obtain the traced data through querying based on the data information.

25. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 12.

26. A computer-readable storage medium, comprising computer program instructions, wherein when the computer program instructions are executed by a computing device cluster, the computing device cluster performs the method according to any one of claims 1 to 12.

27. A computer program product comprising instructions, wherein when the instructions are run by a computing device cluster, the computing device cluster is enabled to perform the method according to any one of claims 1 to 12.
